(19) Europäisches Patentamt
European Patent Office
Office européen des brevets

(11) **EP 3 239 947 A1**

(12) **EUROPEAN PATENT APPLICATION**
published in accordance with Art. 153(4) EPC

(43) Date of publication:
**01.11.2017 Bulletin 2017/44**

(51) Int Cl.:
***G08B 25/04*** (2006.01)　　***G08B 25/10*** (2006.01)

(21) Application number: **14908940.1**

(86) International application number:
**PCT/JP2014/083970**

(22) Date of filing: **22.12.2014**

(87) International publication number:
**WO 2016/103332 (30.06.2016 Gazette 2016/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Technomirai Co., Ltd
Tokyo 169-0075 (JP)**

(72) Inventor: **MIWA, Kazuo
Tokyo 169-0075 (JP)**

(74) Representative: **Appelt, Christian W.
Boehmert & Boehmert
Anwaltspartnerschaft mbB
Pettenkoferstrasse 22
80336 München (DE)**

(54) **DIGITAL FIND SECURITY SYSTEM, METHOD, AND PROGRAM**

(57)　　Provided are a digital find security system, method, and program which can reliably make a report to an employee closest to an event point and allow the employee to more promptly rush to the scene. In a digital find security system (100), a control unit (110) refers to facility layout information stored in a layout information storage unit (114A), and calculates moving distances between a suspicious person and respective mobile terminal devices close to a position of the suspicious person on the facility layout. Then, the control unit (110) corrects moving distances extracted for the respective employees by adding correction coefficients and converts these into moving time distances, and transmits information regarding the suspicious person to a mobile terminal device (30) at the shortest moving time distance to the position of the suspicious person.

F I G. 1

## Description

[Technical Field]

The present invention relates to a digital find security system, method, and program for allowing an employee to rush to an event point where a case has occurred in a surveillance target area.

[Background Art]

Because of the demand for convenience and consumption preferences due to the diversification of society, business categories of commercial retail are changing. For example, convenience stores, supermarkets, malls, department stores, station buildings, air terminals, head offices, IT facilities, factories, laboratories, banking facilities, sports stadiums, housing complexes, and detached houses, etc., and category killers including drug stores, home centers, consumer electronics/book centers, clothing specialty stores, and jewelry departments have been developed to become higher in the composition of customer support and sales, and the frequency of customer use has been increasing year by year. Further, an improvement in security at event halls and schools, etc., has been demanded.

To commercial facilities, a variety of creative efforts and measures such as measures against competing stores, and intense effort and competition for an increase in revenue and profit have been forced in the assortment of items, quality, prices, volumes, etc., in order to achieve an increase in the number of customer introductions and a higher sales frequency.

In a commercial facility, a large number of customers come to sales floors, and in its back area (hereinafter, appropriately referred to also as a "back facility"), persons in charge of delivery operations of a large amount of merchandise and delivery operators, employees, and part-timers access a kitchen, a warehouse, a break room, an office room, etc., of the back-sales-floor facility at all times. At a store exit to the outside, a security guard(s) performs monitoring, but with the number of security guards, a sufficient response by monitoring is not feasible for an area that includes all the kitchen, warehouse, break room, and office room of the back facility where customers are not allowed access. Therefore, a cash loss accident from an office room/cashier's office room and theft of merchandise using a vehicle in a concealed manner with delivery operators in a warehouse or cargo handling area have occurred.

Those other than persons in charge are not allowed to enter the cargo handling area, warehouse, break room, and office room/cashier's office room of the back facility. But, it is difficult during ordinary operations that a responsible person (s) or a security guard (s) monitor all activities at all times. Under the present circumstances, a large number of persons including persons in charge of delivery operators, part-timers, and part-timers for stocking shelves with merchandise after hours are moving about. Management to prohibit entry into a restricted zone in a back facility and means to cope with actual entry are still not sufficient. From that perspective, a security system for actions such as warning the person in question and reporting to a security guard and/or a responsible person in real time is necessary.

The flow of operation when supplying merchandise to a commercial facility includes unloading the merchandise in a truck yard, inspecting the merchandise, temporarily keeping the merchandise in stock at a cargo handling yard until a delivery to warehouses, and delivering at any time to warehouses by persons in charge of merchandise. The merchandise is temporarily kept at the cargo handling yard before being stored in a warehouse by the person in charge of merchandise. Neither a person exclusively engaged in inspection nor a security guard is sometimes present there because of the operations, and during that period of time, cases occur in which a large number of merchandise loaded on a cart in a warehouse or cargo handling area is stolen by using a vehicle or the like. A method of manned guards by having a plurality of security guards on duty at all times is employed, but the security guards have operations other than being on guard such as telephone communication and front desk duties, and because also of a physiological response or the like, it is difficult for them to monitor all activities. Moreover, the back facility is opened or closed to the outside by a shutter. But, when a plurality of merchandise are delivered to cause frequent access, the shutter is kept open the whole time and the monitoring cannot be thoroughly performed, so the measures against cases such as theft and loss are not sufficient.

Moreover, it is also often the case that a person engaged in inspection, personnel required for merchandise handling, or a security guard is not on duty at all times at the cargo handling yard, and it is also often the case that the truck yard and the cargo handling yard face each other and are not partitioned at all times by a wall, a shutter, or the like. In this case, damage from the theft of a large amount of merchandise together with the cart in a concealed manner with delivery operators of clients occurs, and which has caused a huge amount of loss to the company like shoplifting. Guards are still not sufficient despite a monitoring camera(s) and security personnel.

Even when stolen merchandise is loaded on a truck, situations cannot be determined without manned monitoring as matters stand, so a defense system against the case in which stolen merchandise is carried out and transported by a truck is still insufficient.

In addition to the above monetary loss, there are also concerns for social worries. Examples thereof that can be mentioned are tampering at corporate workplaces and information management at production sites.

Entry of outsiders to laboratories for corporate product development, factories at production sites, and cooking areas for preparing food has been strictly prohibited and controlled. Providing layers of guards by, for example, a monitoring camera(s), infrared rays, fingerprint authentication, and manned management has improved security quality. However, costs required therefor are on the increase. It is in fact difficult to manage employees including the whole range of their activities, and recent cases also prove that the management is still insufficient.

Against information leakage, theft, tampering, etc., by human acts that occur in companies, preventing entry of outsiders from the outside has been strictly managed by various methods etc., described above, however, information leakage, theft, tampering, etc., by human acts that occur within companies are difficult to be managed because unlike the entry from the outside, permitted persons can gain access. The fact is that the internal management is not real-time management. Therefore, a case such as information leakage, theft, or tampering in a company is known under some circumstances at a later date after the occurrence and is then investigated. But, clear-cut facts as to who made contact and when contact was made are unclear, so the security management at the occurrence of the case or before the case occurs is not sufficient.

Patent Literature 1 describes a shoplifting prevention system at a gate of which a monitoring camera is provided and which acquires face information from a received image, refers to face information saved in a storage device, and displays a screen showing the position of shooting in the store if a person corresponding to the face information has been shot.

Patent Literature 2 describes a shoplifting detection system applying face authentication that informs a store attendant by an alarm that an intruder has come to the store through face recognition.

In such a conventional back facility monitoring system, an effective defense has not been taken for the occurrence of a cash loss accident at an office room/cashier' s office room of the back facility and damage from the theft of a large amount of merchandise together with the cart by using a vehicle in a concealed manner with delivery operators in a warehouse or cargo handling area.

For example, at the back of a commercial facility, a large number and amount of merchandise is delivered before hours to warehouses for each article of merchandise in the area of cargo unloading, inspection, delivery, and cargo handling by delivery vehicles' coming and leaving a truck yard. Because there are many and different types of operations such as carrying out empty carts after a delivery of merchandise by corresponding delivery operators, it is difficult to monitor the back facility at all times. Moreover, employees of the commercial facility are busily occupied with their operations such as placing orders of merchandise, waiting on customers on sales floors, stocking shelves with merchandise on sales floors, and displaying merchandise in order to secure sales and profit, and for deliveries of merchandise and sales floor operations such as stocking shelves and displays on sales floors, the back facility becomes lax in management and is in an unmanned state for a significant amount of time. Theft and the like have occurred in the meantime.

[Citation List]

[Patent Literature]

[Patent Literature 1] JP 2011-233133 A
[Patent Literature 2] JP 2008-257487 A

[Summary of Invention]

[Technical Problem]

However, in such a conventional facility monitoring system, as in the foregoing, in a case where a suspicious person is found or a disaster occurs, even when an attempt is made to make a report this to an employee near the suspicious person, a fire occurrence location or a position of a disaster prevention device (hereinafter, referred to as "event point" as necessary), depending on the situation such as the facility layout, the employee is not always an employee who can rush to the event point earliest. In this case, a report is made to an employee other than an employee who can rush to the event point earliest, and responding is delayed. If rushing to the event point is delayed, the effect of the security system is accordingly lost.

An object of the present invention is to provide a digital find security system, method, and program which can reliably make a report to an employee who can rush to an event point earliest, allow an employee to rush to the event point.

[Solution to Problem]

A digital find security system according to the present invention is to allow an employee to rush to an event point where a case has occurred in a surveillance target area, and comprises layout information storing means for storing facility layout information in the surveillance target area, positional information acquiring means for acquiring positional information of mobile terminal devices respectively carried by a plurality of employees with them in the surveillance target area, position identifying means for identifying a position of the event point in the surveillance target area, and control means for obtaining moving distances between acquired positions of the mobile terminal devices and an identified position of the event point based on the layout information, and making a report to the mobile terminal device at the shortest moving distance.

The control means converts the moving distances into moving time distances until the employees rush to the event point, and makes a report to the mobile terminal device at the shortest moving time distance, and accordingly, based not on the moving distances on the layout but on the actual moving time distances (that is, necessary times) that employees travel until actually reaching the scene, a report can be reliably made to an employee who can rush to the event point earliest, so that the employee can more promptly rush to the event point.

By correcting the moving time distances based on personal information of the employees, actual moving time distances that employees travel until actually reaching the scene can be more accurately calculated, so that the control means can make a report to an employee who can rush to the event point earliest, and this employee can promptly rush to the scene. Personal information includes male/female or wearing skirt/slacks, etc.

The control means creates an actual distance layout of the shortest moving route based on the layout information, and transmits the actual distance layout to the mobile terminal device at the shortest moving distance, and an employee who receives the actual distance layout can promptly rush to the scene while referring to the actual distance layout. The employee can know which route the employee should go on to reach the event point earliest, so that the employee can more promptly rush to the scene. In particular, it becomes unnecessary to confirm the route, so that even a new employee or the like who is unfamiliar with the facility can promptly rush to the scene.

The layout information includes stairs presence information, and the moving time distance differs between a case of climbing stairs and a case of descending stairs, and accordingly, a moving time distance that an employee travels until actually reaching the scene is accurately calculated by considering the difference in moving time distance between the case where the employee climbs stairs and the case where the employee descends stairs. As a result, a report can be made to an employee who can rush to the event point earliest, so that this employee can promptly rush to the scene.

The control means makes a report to the mobile terminal device at the second shortest moving distance in a case where the mobile terminal device at the shortest moving distance is set to be unable to respond, and accordingly, even in a case where an employee carrying the mobile terminal device at the shortest moving distance with him/her is unable to respond because of stocking shelves or physiological reasons, an employee carrying the mobile terminal device at the second shortest moving distance with him/her can promptly make a response. Employees may go to a warehouse or go to the bathroom, and thus do not always stay in fixed positions, and therefore, a case is considered in which reporting to an employee to whom a report is to be made is not feasible. Such a situation can be dealt with by setting response-inability.

A digital find security method according to the present invention is to allow an employee to rush to an event point where a case has occurred in a surveillance target area, and comprises layout information storing step of storing facility layout information in the surveillance target area, positional information acquiring step of acquiring positional information of mobile terminal devices respectively carried by a plurality of employees with them in the surveillance target area, position identifying step of identifying a position of the event point in the surveillance target area, and control step of obtaining moving distances between acquired positions of the mobile terminal devices and an identified position of the event point based on the layout information, and making a report to the mobile terminal device at the shortest moving distance.

In addition, the present invention provides a program which makes a computer operate as a digital find security system that allows an employee to rush to an event point where a case has occurred in a surveillance target area, and comprises layout information storing means for storing facility layout information in the surveillance target area, positional information acquiring means for acquiring positional information of mobile terminal devices respectively carried by a plurality of employees with them in the surveillance target area, position identifying means for identifying a position of the event point in the surveillance target area, and control means for obtaining moving distances between acquired positions of the mobile terminal devices and an identified position of the event point based on the layout information, and making a report to the mobile terminal device at the shortest moving distance.

[Advantageous Effects of Invention]

According to the present invention, a report can be reliably made to an employee who can rush to an event point earliest, and the employee can be made to more promptly rush to the scene.

[Brief Description of Drawings]

[Fig. 1] Fig. 1 is a block diagram showing a configuration of a digital find security system according to an embodiment of the present invention.
[Fig. 2] Fig. 2 is a block diagram of a control unit of a monitoring device of the digital find security system according to the embodiment of the present invention.
[Fig. 3] Fig. 3 is a flowchart showing a registration processing of persons by the control unit of the monitoring device of the digital find security system according to the embodiment of the present invention.
[Fig. 4] Fig. 4 is a flowchart showing a registration processing of a back facility layout by the control unit of the monitoring device of the digital find security system according to the embodiment of the present invention.

[Fig. 5] Fig. 5 is a flowchart showing a monitoring control processing of the monitoring device of the digital find security system according to the embodiment of the present invention.

[Fig. 6] Fig. 6 is a flowchart showing a monitoring control processing of the monitoring device of the digital find security system according to the embodiment of the present invention.

[Fig. 7] Fig. 7 is a flowchart showing a suspicious person information transmission processing of transmitting information regarding a suspicious person to an employee at the shortest moving time distance to a position of the suspicious person by the digital find security system according to the embodiment of the present invention.

[Fig. 8A] Fig. 8A is a view describing a response to a suspicious person by the digital find security system according to the embodiment of the present invention.

[Fig. 8B] Fig. 8B is a view describing a response to a suspicious person by the digital find security system according to the embodiment of the present invention.

[Fig. 9A] Fig. 9A is a view describing a response to a fire by the digital find security system according to the embodiment of the present invention.

[Fig. 9B] Fig. 9B is a view describing a response to a fire by the digital find security system according to the embodiment of the present invention.

[Fig. 10A] Fig. 10A is a view showing information regarding a suspicious person and a back facility layout to be transmitted to an employee present at the shortest moving time distance by the digital find security system according to the embodiment of the present invention.

[Fig. 10B] Fig. 10B is a view showing detailed information regarding a suspicious person to be transmitted to an employee present at the shortest moving time distance by the digital find security system according to the embodiment of the present invention.

[Fig. 11] Fig. 11 is a flowchart showing a monitoring control processing of the mobile terminal device of the digital find security system according to the embodiment of the present invention.

[Fig. 12A] Fig. 12A is a view showing an example of a back facility layout of the digital find security system according to the embodiment of the present invention.

[Fig. 12B] Fig. 12B is a view showing an example of a back facility layout of the digital find security system according to the embodiment of the present invention.

[Fig. 13A] Fig. 13A is a view showing an example of a back facility layout of the digital find security system according to the embodiment of the present invention.

[Fig. 13B] Fig. 13B is a view showing an example of a back facility layout of the digital find security system according to the embodiment of the present invention.

[Description of Embodiments]

Hereinafter, modes for carrying out the present invention will be described in detail with reference to the accompanying drawings.

(Embodiment)

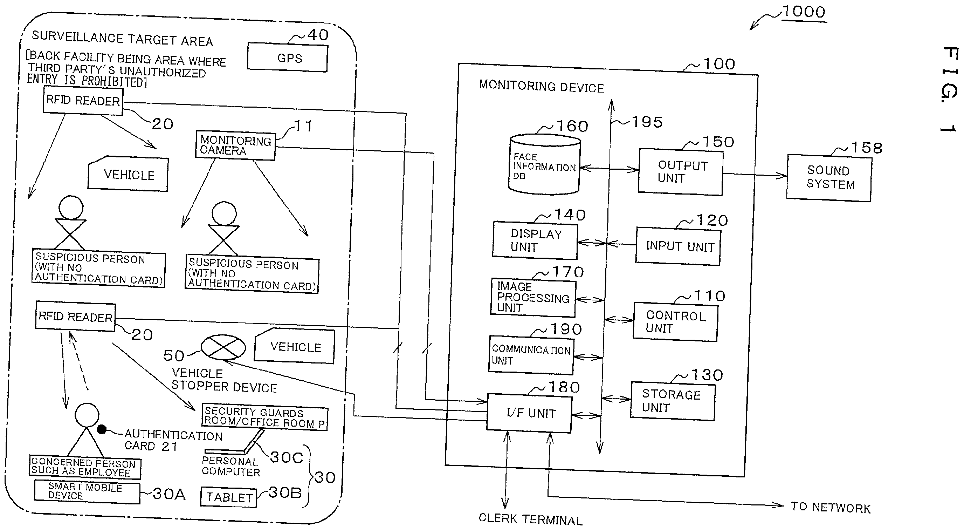

Fig. 1 is a block diagram showing a configuration of a digital find security system according to an embodiment of the present invention.

This embodiment is an example of a digital find security system that monitors a video shot by a monitoring camera and allows an employee to rush to an event point. The event point is a position of a suspicious person by way of example. Other than a suspicious person, the event point may be a fire occurrence location, a location of a disaster prevention device, or the like.

As shown in Fig. 1, the digital find security system 1000 comprises a plurality of monitoring cameras 11 installed on a ceiling or the like of a surveillance target area, a plurality of RFID (Radio Frequency IDentification) readers 20 installed in the surveillance target area such as a back facility being a staff-only area including a truck yard where unauthorized entry is prohibited, an authentication card 21 that a concerned person such as an employee (hereinafter, also referred to as an "employee") carries with him/her and the RFID reader 20 authenticates, a mobile terminal device 30 that the employee carries with him/her, a GPS (Global Positioning System) 40 that captures a position of the employee in the surveillance target area, a vehicle stopper device 50, and a monitoring device 100 that controls the system as a whole.

The digital find security system 1000 is a system that monitors a video shot by the monitoring camera 11 installed so as to cover the surveillance target area such as a back facility being a staff-only area including a truck yard where unauthorized entry is prohibited, for preventing an act of theft, tampering, or leaking information by a suspicious person.

< monitoring camera 11>

The monitoring cameras 11 are cameras for authentication that shoot persons' faces. The monitoring cameras 11 are installed at various positions in the surveillance target area such as a back facility being a staff-only area including a truck yard where unauthorized entry is prohibited, and shoot persons' faces. Images shot by the monitoring cameras 11 are output to the monitoring device 100. The monitoring camera 11 may shoot a moving image at all times, or may shoot a single still image every certain period of time (for example, a few seconds).

<RFID reader 20>

The RFID reader 20 is, generally, for managing the settlement or the like of a commodity with an RF tag by detecting whether there is an answer-back in response to a transmission to the RF tag attached to the commodity. In addition, the RF tag is removed from or disabled in an article having been brought into a state of being able to be rightfully taken out of the store by being purchased or the like.

In the present embodiment, the RFID reader 20 authenticates the authentication card 21 that an employee possesses. The RFID reader 20 captures a position of the employee carrying the authentication card 21 with him/her by the authentication of the authentication card 21 that the employee possesses.

Also, in the present embodiment, a person or vehicle driver who does not possess the authentication card 21 despite being shot by the monitoring camera 11 is identified as a suspicious person or a suspicious vehicle driver (whose position is an event point).

In addition, in the present embodiment, there is an example of the authentication card 21 using an RFID authentication card that performs authentication with the RFID reader 20, but the authentication card may be by any authentication means. Also, the authentication card 21 is merely referred to as being in a card shape for convenience of description, and may not necessarily be in a card shape to be an authentication tag or the like.

<Mobile terminal device 30>

The mobile terminal devices 30 are respectively carried by a plurality of employees with them. Examples of the mobile terminal devices 30 are smartphones 30a, tablets 30b, and notebook PCs 30c. Other examples of the mobile terminal devices 30 are mobile telephones, PHS (Personal Handy-Phone System) phones, PDAs (Personal Digital Assistants), and dedicated terminals. In the present embodiment, the mobile terminal device 30 can be used by each employee at a variety of locations (that is, current position), and can receive an e-mail message, a video including a moving image, or the like from the monitoring device 100 via a telephone line (not shown) .

In the present embodiment, the mobile terminal devices 30 are used as the smartphones 30a or the tablets 30b, and each individual can use the same at a variety of locations (that is, current position). One of the mobile terminal devices 30 is disposed at headquarters/a head office (not shown).

The mobile terminal device 30 may have a configuration comprising the GPS 40 that captures a position of the employee.

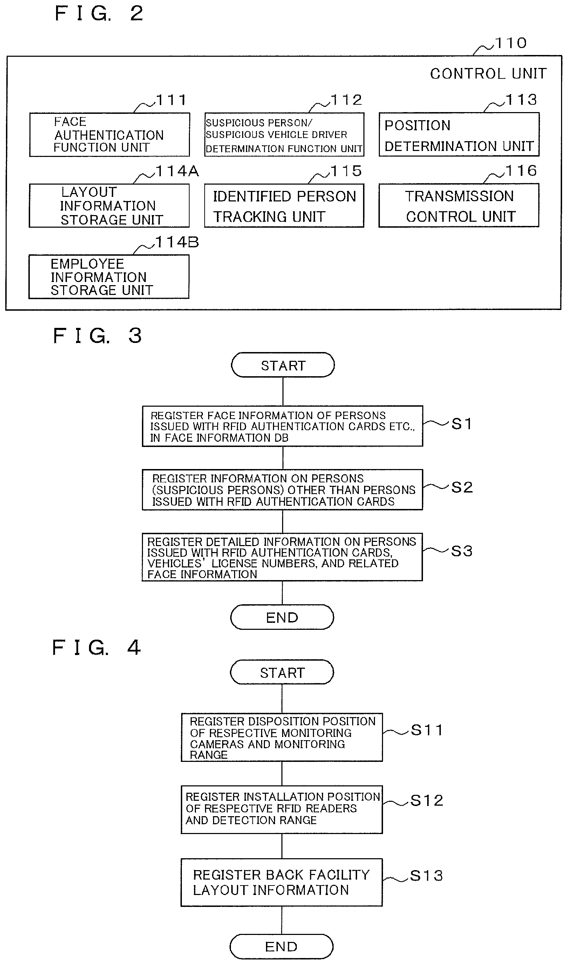

Also, the mobile terminal device 30 includes a response-inability setting unit (response-inability setting means, not shown) that presets not being able to answer back to information transmitted from a control unit 110 (refer to Fig. 2) of the monitoring device 100 to be described later. The mobile terminal device 30, when response inability has been set by the response-inability setting unit, returns an answer-back of said response inability if transmission of information is received from the control unit 110 of the monitoring device 100.

<GPS 40>

The GPS 40 receives radio waves of positional information from a GPS satellite or the like. The GPS 40 calculates, from information received via a GPS antenna, current positional information as three parameters of the latitude, longitude, and altitude to acquire positional information. The acquired positional information is transmitted on a timely basis to the monitoring device 100.

In addition, in the present embodiment, the example using a GPS satellite has been mentioned as a means for acquiring positional information, but it may be a system other than the GPS using a positional relationship with a base station. For example, when an Android (registered trademark) smartphone or a highly functional mobile phone with a camera is used as the mobile terminal device 30 being a mobile terminal, it is also possible to acquire current positional information of its own terminal through approach checking by performing transmission/reception of information with a mobile phone company server via a base station and mobile telephone communication network (not shown) used in place of GPS 40 or in combination therewith.

Also, positional information acquisition by Wi-Fi (Wireless Fidelity) positioning, that is, positional information acquisition using a Wi-Fi access point and a predetermined positional information service may be used.

<Vehicle stopper device 50>

The vehicle stopper device 50 is a vehicle stopper function unit consisting of a flap or rod-shaped member that stands up from the road surface in accordance with a control signal from the monitoring device 100. The vehicle stopper device 50 has a function of, when a person identified as a suspicious vehicle driver tries to drive out of the surveillance area, being activated by the monitoring device 100 and hindering the suspicious vehicle's driving away therefrom. Also, the above-described flap or rod-shaped member may be connected or interlocked to a chain or gate.

[Monitoring device 100]

The monitoring device 100 is installed in, for example, a control room of the store, and provides centralized control for the surveillance target area in the store. The monitoring device 100 may be a common server computer, a personal computer, or the like.

The monitoring device 100 comprises a control unit 110 (control means), an input unit 120, a storage unit 130, a display unit 140, an output unit 150, a face information database (DB) 160 (face image storing means), an image processing unit 170, an interface (I/F) unit 180, and a communication unit 190, and the respective units are connected by a bus 195.

When it has been detected that a person being a suspicious person (hereinafter, appropriately referred to as a "specific person") (whose position is an event point) has showed up at the store, the monitoring device 100 notifies information on this person and store information to the headquarters/head office and a security company system through a network.

In the following, when the subject is described as "the XX unit," the control unit 110 reads out respective programs from a ROM as needed and then loads the same in a RAM, and executes respective functions (described later). The respective programs may be stored in advance in the storage unit 130, or may be taken into the monitoring device 100 when necessary via another storage medium or communication medium.

The control unit 110 is formed by a CPU (Central Processing Unit) or the like, and controls the monitoring device 100 as a whole and executes a monitoring program to function as a digital find security system. A detailed configuration of the control unit 110 will be described later.

The input unit 120 is an input device for a user of the monitoring device 100 to input instructions and the like to the monitoring device 100, such as a keyboard, a mouse, a touch panel provided on a screen of the display unit 140, and a microphone.

The storage unit 130 stores still and/or moving images received from the monitoring cameras 11 and various data, programs, etc., to be used by the control unit 110.

The display unit 140 displays images received from the monitoring cameras 11, a GUI (Graphical User Interface) to operate the monitoring device 100, etc., including operating conditions of the monitoring device 100.

The output unit 150 is, for example, an audio interface, and outputs to a sound system 158 in the store a sound signal from the monitoring device 100. The sound signal to be output from the monitoring device 100 to the sound system 158 may be, for example, a sound signal input via a voice input device such as a microphone provided in the input unit 120 or a sound signal of music data stored in the storage unit 130 that is played by the control unit 110. The sound system 158 comprises an amplifier and a plurality of speakers disposed in the store, and makes an announcement in the store of a sound signal input from the monitoring device 100.

The face information DB 160 stores face images (face information) of suspicious persons and store concerned persons, etc.

The image processing unit 170 performs a predetermined processing to a received image. Examples of the predetermined processing include contour extraction, image resizing, and resolution converting processing.

Also, the image processing unit 170 performs image processing such as applying a red or yellow frame to a face image to be transmitted to the employee's mobile terminal device 30.

The I/F unit 180 connects each monitoring camera 11 disposed in the surveillance target area and the monitoring device 100. Also, the I/F unit 180 connects with each RFID reader 20 disposed in the surveillance target area, and sends out an authentication result of the authentication card 21 an employee who approached the RFID reader 20 possesses to the monitoring device 100. Also, the I/F unit 180 connects to the headquarters/head office, security company, and the like (not shown) by a network or dedicated line. As basic data such as persons' faces registered in the face information DB 160, data is acquired from the headquarters/head office, security company, and the like (not shown) via the I/F unit 180 to construct the face information DB 160. Also, exchanging information with the headquarters/head office, security company, and the like (not shown) can update each other's face information DBs to ones of the latest face images (face information). In addition, the security company is not an essential structural element of the digital find security system according to the present embodiment.

The communication unit 190 transmits/receives data with respect to the mobile terminal device 30 via a base station. In the present embodiment, the communication unit 190 receives positional information of each mobile terminal device 30 every certain period of time from the mobile terminal device 30 via the base station, and when a suspicious person is recognized, transmits information (such an e-mail message or a video including a moving image) regarding the suspicious person.

[Control unit 110]

Fig. 2 is a block diagram of the control unit 110 of the monitoring device 100 of the digital find security system according to the embodiment of the present invention.

As shown in Fig. 2, the control unit 110 comprises a face authentication function unit 111 (face authentication collating means), a suspicious person/suspicious vehicle driver determination function unit 112 that determines a suspicious person or suspicious vehicle driver, a position determination unit 113 (positional information acquiring means, position identifying means) that determines positions of a suspicious person and an employee, a layout information storage unit 114A that stores layout information of the surveillance target area, an employee information storage unit 114B that stores attribute information of employees, an identified person tracking unit 115 that tracks an identified person, and a transmission control unit 116 that, based on acquired positional information, transmits information regarding the suspicious person preferentially to an employee (a mobile terminal device 30) who can rush to the suspicious person earliest.

The control unit 110 obtains moving distances between positions of the mobile terminal devices 30 close to an event point (hereinafter, a position of a suspicious person by way of example) and the event point, and makes a report and transmits information regarding the suspicious person to a mobile terminal device 30 at the shortest moving distance. Here, the control unit 110 determines a suspicious person when a result of collation by the face authentication function unit 111 is a match (a non-match with face images of authorized persons and a match with a face image of the suspicious person).

In detail, by referring to facility layout information stored in the layout information storage unit 114A, the control unit 110 calculates moving distances between an event point and the respective mobile terminal devices 30 close to this event point on the facility layout.

The control unit 110 corrects the moving distances extracted for the respective employees by adding correction coefficients and converts the moving distances into moving time distances. The control unit 110 determines a mobile terminal device 30 at the shortest moving time distance to the position of the suspicious person.

By referring to facility layout information stored in the layout information storage unit 114A, the control unit 110 creates an actual distance layout showing a shortest moving route for making the employee at the shortest moving time distance reach the suspicious person.

The control unit 110 transmits the created actual distance layout together with information regarding the suspicious person to the mobile terminal device 30 at the shortest moving time distance.

In a case where the mobile terminal device 30 at the shortest moving distance is set to be unable to respond, the control unit 110 returns an answer that transmission is not to be performed to this mobile terminal device 30, and transmits the information to the mobile terminal device 30 at the second shortest moving distance.

For example, if a predetermined time has elapsed after transmitting the information regarding the suspicious person to the mobile terminal device 30 or an answer-back of response inability is returned from the response-inability setting unit, the control unit 110 determines the position of a mobile terminal device 30 the second closest, that is, at the second shortest moving distance to the suspicious person, and transmits the information regarding the suspicious person to this mobile terminal device 30.

Here, the information regarding the suspicious person includes information of the position of the suspicious person and the position of the employee overlapped on the surveillance target area. The information regarding the suspicious person includes a face image of the suspicious person present in the surveillance target area.

The control unit 110 in the case where a suspicious person is detected is described above by way of example, and rushing to a fire occurrence location (event point) or a position where a disaster prevention device such as a fire alarm is installed (event point), in place of a suspicious person, can also be realized by the same control.

<Face authentication function unit 111>

The face authentication function unit 111 performs face authentication to determine whether the face of a person included in an image received from the monitoring camera 11 is any of the persons' faces registered in the face information DB 160. The face authentication can be performed based on similarity of face information extracted from a received image to the face information registered in the face information DB 160. Specifically, if the face information includes template images, similarity between the template images can be calculated.

Also, the face authentication function unit 111 acquires, from face regions, information representing humans' facial characteristics (face information) to be used for face authentication, and registers the information in the face information database (DB) 160 in association with the individual images. Also, the face authentication function unit 111 receives persons' images transmitted from the headquarters (not shown) and registers the images in the face information DB 160.

In the present embodiment, the face authentication function unit 111 registers the following face information and related information.

- Registration of persons issued with RFID authentication cards
- Registration of store concerned persons etc.
- Registration of employee concerned persons etc.

And, in some cases,

- Registration of persons other than those registered with RFID authentication cards
- Registration of faces of suspicious persons or suspicious vehicle drivers

In the present embodiment, the face authentication function unit 111 registers face images of persons authenticated in the surveillance target area such as a back facility. The present digital find security system is a system that monitors incoming and outgoing suspicious persons in a surveillance target area such as a back facility. Face information of suspicious persons or suspicious vehicle drivers can be previously stored to some extent, but it is difficult to have stored face information of all suspicious persons. If a mode is employed in which only the face information of suspicious persons is collated for authentication, an act of theft and the like by an overlooked suspicious person cannot be prevented, so the present digital find security system cannot be made effective.

Therefore, in the present embodiment, face images of persons (persons issued with RFID authentication cards, store concerned persons, employee concerned persons, etc.) authenticated in the surveillance target area such as a back facility are registered, and when a face image of a person who accesses the surveillance target area such as a back facility does not match any of the registered person's face images, the person is determined to be a suspicious person. Also, the face authentication function unit 111 also performs registering face images of suspicious persons, and can in this case immediately determine a suspicious person by an authentication collation of the face images of suspicious persons.

<Suspicious person/suspicious vehicle driver determination function unit 112>

(Surveillance target area)

The suspicious person/suspicious vehicle driver determination function unit 112 determines the person or vehicle driver to be a suspicious person or a suspicious vehicle driver if a person or vehicle driver who does not possess the authentication card 21 enters the surveillance target area such as a back facility being a staff-only area including a truck yard where unauthorized entry is prohibited. Specifically, the suspicious person/suspicious vehicle driver determination function unit 112 registers persons issued with the authentication cards 21 (RFID authentication cards), and if a person or vehicle driver other than the registered persons with the authentication cards 21 (RFID authentication cards) is detected in the surveillance target area, determines the person or vehicle driver to be a suspicious person or a suspicious vehicle driver. Here, the registration with the authentication cards 21 (RFID authentication cards) includes registration of employees and store concerned persons, etc.

(Access-restricted spot)

Also, even among non-suspicious persons, that is, persons who possess the authentication cards 21, depending on the intended use, work type and the degree of information of each workplace, the office room or each room, it is sometimes wished to determine access concerned persons for a corresponding surveillance target area so as to allow only permitted concerned persons to access the area. The suspicious person/suspicious vehicle driver determination function unit 112 can perform such a detailed determination according to the work purpose or the like. The suspicious person/suspicious vehicle driver determination function unit 112, when room access control that specifies access concerned persons has been set, hands over the determination processing to the face authentication function unit 111. In this case, the face authentication function unit 111 recognizes by face recognition whether being a person whose access to a specific area or the like has been permitted, and if the person has not obtained permission, performs processing regarding him/her as a quasi-suspicious person.

(Scheduled access restriction)

Also, even among non-suspicious persons, that is, persons who possess the authentication cards 21, it is sometimes wished to allow concerned persons' access only at certain times in accordance with an operation schedule including predetermined days of the week and hours. The suspicious person/suspicious vehicle driver determination function unit 112 can perform such a detailed determination according to the operation schedule or the like. The suspicious person/suspicious vehicle driver determination function unit 112, if it is outside duty hours, hands over the determination processing to the face authentication function unit 111. In this case, the face authentication function unit 111 recognizes by face recognition whether being a person who has obtained permission for accessing outside duty hours, and if the person has not obtained permission, performs processing regarding him/her as a quasi-suspicious person.

In addition, the suspicious person/suspicious vehicle driver determination function unit 112 is also capable of determining not a suspicious vehicle driver but the suspicious vehicle itself or in combination with the suspicious vehicle driver. In this case, the suspicious person/suspicious vehicle driver determination function unit 112 makes a collation based on whether the vehicle's license plate is any of the previously registered vehicle license plates.

<Position determination unit 113>

The position determination unit 113 acquires positional information of employees in the surveillance target area by GPS positional information or the RFID readers 20. Specifically, the position determination unit 113 acquires positional information of an employee in the surveillance target area through authentication of the authentication tag that the employee carries with him/her by the plurality of RFID readers 20 installed in the surveillance target area. In this case, when an employee approaches some RFID reader 20, the position determination unit 113 determines that the employee is in proximity to the corresponding RFID reader 20 through authentication, by some RFID reader 20, of the authentication card 21 that the employee carries with him/her. Because the installation positions of the RFID readers 20 have been registered in advance in the layout information storage unit 114A, a position of the employee can be determined.

Also, the position determination unit 113 acquires positional information from a GPS function unit comprised in the mobile terminal device 30.

The position determination unit 113 has a function as a position identifying means to identify a position of an event point in a surveillance target area in cooperation with the control unit 110.

<Layout information storage unit 114A>

The layout information storage unit 114A stores surveillance target area layout information. Facility layout information includes stairs (upstairs/downstairs), doors (push/open), corners, and narrow passages, etc. In addition, the layout information storage unit 114A stores wearing of uniforms (skirts/slacks) of employees on the current day, and, in a case where a part of the surveillance target area is outdoors, raining and snowing as temporary information.

Also, the layout information storage unit 114A registers surveillance area layout information in advance based on positions of monitoring cameras 11, installation positions of the RFID readers 20, and area names, etc.

<Employee information storage unit 114B>

The employee information storage unit 114B stores attribute information of employees. This attribute information includes, in addition to general information such as age, gender, and affiliation, persons having difficulty in moving, etc.

<Identified person tracking unit 115>

The identified person tracking unit 115 detects a person identified to be a suspicious person by tracking with the plurality of monitoring cameras 11, and checks a movement history in the surveillance target area. The identified person tracking unit 115 tracks movement of the suspicious person, and if the suspicious person distances himself/herself by a predetermined distance from the position of the closest mobile terminal device 30, that is, at a short moving distance, transmits information regarding the suspicious person to another mobile terminal device 30.

<Transmission control unit 116>

If a result of collation by the face authentication function unit 111 is a match (a non-match with an authenticated person's face image, and a match with a suspicious person's face image), the transmission control unit 116 determines the position of a mobile terminal device 30 at the shortest moving time distance to the suspicious person the collation result with whom is a match based on the positional information acquired from the position determination unit 113, and transmits information regarding the suspicious person to this mobile terminal device 30.

Although the details will be described later, the transmission control unit 116 transmits to an employee at the shortest moving time distance to the position of a suspicious person a sound/a moving image/positional information of the suspicious person (information of a layout having marking thereon) by e-mail. In the case of a multi-floored facility, the closeness is determined in consideration of floor-to-floor movement. Also, the transmission is performed in a distinguishable manner with, for example, a red display of a person showing habitual suspicious behavior and with, for example, a yellow display of a mere suspicious person.

If there is no answer-back signal from the employee to whom the transmission was addressed even after an elapse of a predetermined time (for example, five seconds), the transmission control unit 116 chooses a second employee concerned person to perform a retransmission to him/her. The second employee concerned person is (1) a concerned person such as an employee who is at the second shortest moving time distance to the suspicious person, (2) a security guard, a store manager, an assistant store manager, (3) the headquarters/head office, or the like.

Hereinafter, the operation of the digital find security system configured as described above will be described.

First, description will be given of a basic concept of the digital find security system.

(1) At the back of a commercial facility, a large number and amount of merchandise is delivered to a truck yard in and out of business hours, and by delivery vehicles' coming and leaving there, delivered to warehouses for each article of merchandise in the area of cargo unloading, inspection, delivery, and cargo handling. Because there are many and different types of operations of carrying-out by delivery operators, it is difficult to monitor empty carts after a delivery of merchandise in the back facility at all times. Moreover, employees of the commercial facility are busy with their operations such as placing orders of merchandise, waiting on customers on sales floors, stocking shelves with merchandise on sales floors, and displaying merchandise in order to secure sales and profit. For deliveries of merchandise and sales floor operations such as stocking shelves and displays on sales floors, the back facility is not sufficiently managed and is even in an unmanned state for a significant amount of time. Theft and the like are considered to have occurred in the meantime.

The present digital find security system prevents an act of theft by monitoring access of a suspicious person to the back facility and behavior of the suspicious person in real time.

(2) The back facility of a commercial facility is guarded by a person engaged in inspection and about two or three security guards. Because of the manned guarding, the back facility can be placed under guard at the time of security patrol, but cannot be placed under guard when no guard is on patrol. Also, there is a limit to guarding the warehouse of each section, cargo handling area, and truck yard with limited manpower, and even an intrusion by a third party cannot be noticed under the present circumstances. For preventing theft, it is important not to allow access of any person other than a person in charge of the section or a concerned person who has obtained permission.

Also, there is an accounting office room where money is handled among the office rooms. In the accounting office room, there is usually an employee (s), but in some cases, he/she may not be present in the accounting office room for some reason or theft may occur by an intruder entering from the outside even when there is an employee(s). Further, there is even a case that theft occurs during open hours.

The present digital find security system catches a sign of intrusion into the accounting office room where money is handled to make defense.

(3) In the back facility, there is a large amount of merchandise and items. Also, a large number of employees, different types of part-time workers, and client concerned persons who perform operations such as delivery, sorting, stock keeping, and stocking shelves and return of such a large amount of merchandise gain access thereto. It is difficult in practice to perform monitoring of persons who access the cargo handling area, aisles, and warehouses through sole manned management by a person engaged in inspection and security guards.

The present digital find security system prevents theft and the like by monitoring the back facility as a whole, for persons other than those concerned of each section, in their access, without interference with ordinary operations.

Next, description will be given of the operation of the digital find security system.

[Registration processing]

First, a registration processing of various information by the digital find security system will be described.

Fig. 3 is a flowchart showing a registration processing of persons by the control unit 110 of the monitoring device 100 of the digital find security system. The present flow is executed by the control unit 110 (Fig. 2) of the monitoring device 100.

In step S1, the face authentication function unit 111 of the control unit 110 registers face information of persons issued with RFID authentication cards, store concerned persons, employee concerned persons, etc., in the face information DB 160. Specifically, the face authentication function unit 111 acquires, from face regions, information representing humans' facial characteristics (face information) to be used for face authentication, and registers the information in the face information DB 160 in association with the individual images. Also, the face authentication function unit 111 receives persons' images transmitted from the headquarters (not shown) and registers the images in the face information DB 160.

In step S2, the face authentication function unit 111 of the control unit 110 registers, in the face information DB 160, face information of persons other than the registered persons who possess the authentication cards 21 to be authenticated by the RFID readers 20. The persons other than the registered persons with the authentication cards 21 are suspicious persons or suspicious vehicle drivers. These suspicious persons also include persons showing habitual suspicious behavior. Examples of the persons showing habitual suspicious behavior are persons who often appear at the scene of a theft and persons informed in advance as marked persons from the headquarters/head office, security company, or the like. In the present embodiment, a higher level of monitoring is employed for the persons showing habitual suspicious behavior. In addition, the registration of persons' face information may be by updating a face information DB from the headquarters/head office, security company, or the like.

In step S3, the control unit 110 performs registration of detailed information, vehicles' license numbers, and related information on the persons issued with RFID authentication cards, store concerned persons, employee concerned persons, etc.

Next, a registration processing of a surveillance area layout of the digital find security system will be described.

Fig. 4 is a flowchart showing a registration processing of a back facility layout (surveillance target area) by the control unit 110 of the monitoring device 100 of the digital find security system. The present flow is executed by the control unit 110 (Fig. 2) of the monitoring device 100.

In step S11, the layout information storage unit 114A of the control unit 110 registers the disposition positions of the respective monitoring cameras 11 and the surveillance target area such as a back facility being a staff-only area including a truck yard where unauthorized entry is prohibited.

In step S12, the layout information storage unit 114A of the control unit 110 registers the installation positions of the respective RFID readers 20 and the surveillance target area such as a back facility being a staff-only area including a truck yard where unauthorized entry is prohibited.

Examples of the back facility include a "truck yard entrance/exit," a "cargo unloading and inspection area, cargo handling area, warehouses, and refrigerator/freezer," and an "office room and money accounting office room." The back facility layout can be arbitrarily set (step S13).

[Monitoring control of monitoring device 100]

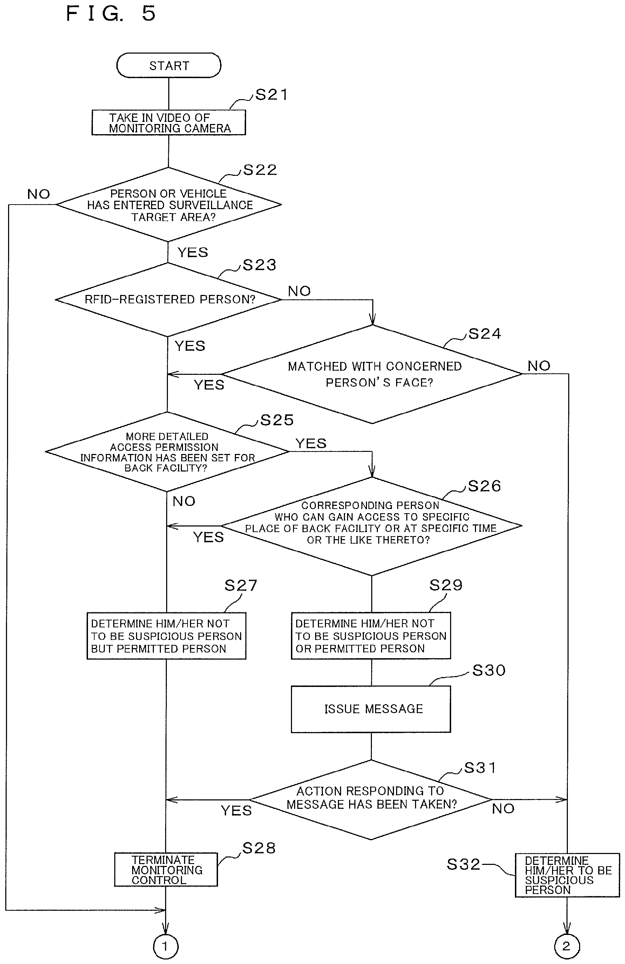

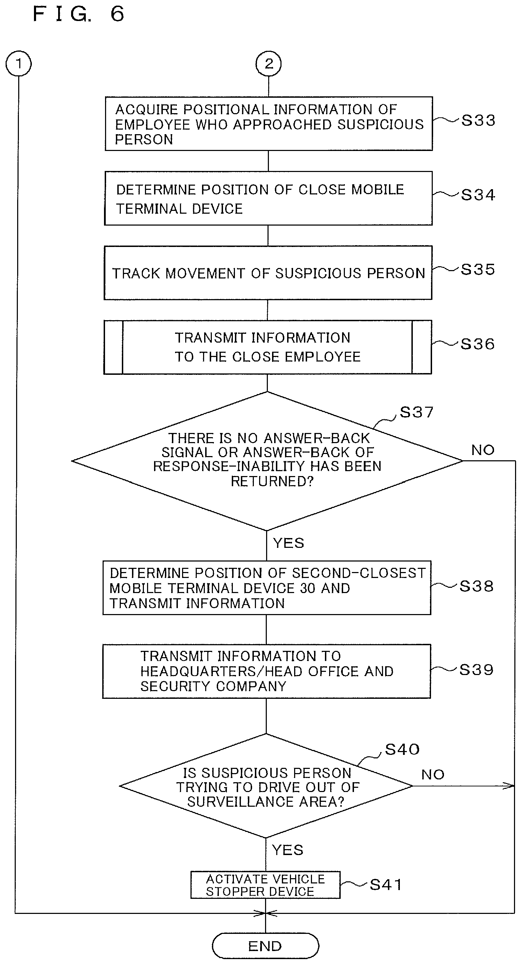

Fig. 5 and Fig. 6 are flowcharts showing a monitoring control processing of the monitoring device 100 of the digital find security system. Fig. 6 is a flow following the connection terminal in Fig. 5. The present flow is executed mainly by the control unit 110 (Fig. 2) of the monitoring device 100.

First, in step S21, the control unit 110 takes in a video of the monitoring camera 11.

In step S22, the control unit 110 determines, based on the video shot by the monitoring camera 11 in a surveillance target area such as a back facility being a staff-only area including a truck yard where unauthorized entry is prohibited, whether a person, vehicle driver, or vehicle has entered the surveillance target area such as a back facility. The "entered the surveillance target area" means a case where a person, vehicle driver, or vehicle has made a new entry this time after a previous determination processing was performed. A variety of persons and vehicles enter/exit or move back and forth to and from the surveillance target area such as a back facility. A person(s) and vehicle(s) an authentication and determination processing of which have been finished by the present flow is excluded from the present determination processing. Here, it can be determined that a vehicle has entered the surveillance target area such as a back facility by executing a pattern recognition processing that collates an image shot before with a current image. The control unit 110 ends the present flow if a person, vehicle driver, or vehicle is not in the surveillance target area such as a back facility.

If a certain person, vehicle driver, or vehicle is in the surveillance target area such as a back facility, the suspicious person/suspicious vehicle driver determination function unit 112 determines in step S23 whether the person, vehicle driver, or vehicle is a person, vehicle driver, or vehicle which possesses the authentication card 21. At respective locations in the back facility such as a truck yard, the RFID readers 20 are installed together with the monitoring cameras 11. Similar to the installation positions of the monitoring cameras 11, the locations where the respective RFID readers 20 are installed have been registered in advance as back facility layout information. When a person who carries the authentication card 21 with him/her approaches the RFID reader 20, an authentication processing is started between the RFID reader 20 and the authentication card 21 by the suspicious person/suspicious vehicle driver determination function unit 112. Based on the establishment of authentication, it is determined that the person who approached the RFID reader 20 is a previously registered person, that is, here, a store concerned person, a delivery operator, its driver, or the like. Because authentication is not established if the person is a person or vehicle driver who does not possess the authentication card 21 to be authenticated by the RFID reader 20, suspicious persons and suspicious vehicle drivers can be determined by the RFID readers 20 disposed at respective locations in the back facility.

If a certain person, vehicle driver, or vehicle enters the surveillance target area such as a back facility and authentication is established between the RFID readers 20 and the authentication card 21, the processing proceeds to step S25 based on a judgment that there is no possibility of a suspicious person in the surveillance target area.

If it is not a person or vehicle driver who possesses the authentication card 21 in the above-described step S23, the face authentication function unit 111 of the control unit 110 performs face authentication of collating a face image of the person shot by the monitoring camera 11 with the face images of employees such as registered store concerned persons, registered persons with RFID authentication cards, and employee concerned persons registered in advance in step S24. Also, the face authentication function unit 111, if having registered faces of suspicious persons/suspicious vehicle drivers in the face information DB 160, performs an authentication collation of the shot person's face image with the face images of suspicious persons/suspicious vehicle drivers. If a suspicious person or suspicious vehicle driver has been previously perceived, it allows more clearly or promptly determining that the suspicious person or the like has intruded into the back facility by having registered a face image of the suspicious person or the like as a person showing habitual suspicious behavior and making the collation. However, it is considered that registering face images of suspicious persons/suspicious vehicle drivers in advance is difficult or insufficient in many cases.

Therefore, in the present embodiment, it is determined whether a face image of a person shot by the monitoring camera 11 in the surveillance target area such as a back facility matches any of the face images of employees such as store concerned persons, registered persons with RFID authentication cards, and employee concerned persons, and if the face image does not match any thereof, the person is determined to be a suspicious person uniformly at this point in time. Also in this case, if face images of suspicious persons/suspicious vehicle drivers have been registered in advance, being a suspicious person/suspicious vehicle driver can be immediately determined. Also, the control unit 110 makes a collation whether the license plate of a vehicle in a shot video is any of the previously registered vehicle license plates to thereby determine that the vehicle in the surveillance target area such as a back facility is a suspicious vehicle driver's vehicle.

In the above-described step S24, if the shot person's face image matches any of the previously registered employees' face images (in the case of a match as a result of a face authentication collation), the processing proceeds to step S25 based on a judgment that the person in the surveillance target area is an appropriate person. On the other hand, if the shot person's face image does not match any of the previously registered employees' face images (in the case of a non-match as a result of a face authentication collation), the processing proceeds to step S32 based on a judgment to be a suspicious person in the surveillance target area.

If it is a person or vehicle driver that possesses the authentication card 21 in the above-described step S23 or when the shot person's face image matches any of the previously registered employees' face images registered in advance in the above-described step S24, the suspicious person/suspicious vehicle driver determination function unit 112 determines in step S25 whether more detailed access permission information has been set for the back facility. That is, it has been determined here, through the determination processing in the above-described step S21 to step S24, that the person present in the back facility such as a truck yard is not a suspicious person, suspicious vehicle driver, or suspicious vehicle. But, it is sometimes wished not to allow admission to a specific department of the back facility or at certain times for administrative reasons even when the person is not a suspicious person. For example, access concerned persons are determined depending on, as content factors, the intended use, work type and the degree of information of each workplace, the office room or each room so as to allow only permitted concerned persons' access. On the other hand, concerned persons' access is allowed at only certain times in accordance with an operation schedule including predetermined days of the week and hours as time factors.

If more detailed access permission information has been set in the above-described step S25, the suspicious person/suspicious vehicle driver determination function unit 112 determines in step S26 whether the person is a corresponding person who can gain access to a specific place of the back facility or at a specific time or the like thereto.

If the person is a corresponding person who can gain access to a specific department of the back facility or at a specific time or the like thereto or if access permission information has not been set in the above-described step S25, the suspicious person/suspicious vehicle driver determination function unit 112 determines in step S27 that the person is not a suspicious person but a permitted person. Next, the control unit 110 terminates the present monitoring control in step S28 to end the present flow.

On the other hand, if the person is not a corresponding person who can gain access to a specific place of the back facility or at a specific time or the like thereto in the above-described step S26, the suspicious person/suspicious vehicle driver determination function unit 112 determines in step S29 that the person is not a suspicious person but is also not a permitted person.

Next, the control unit 110 issues to the non-permitted person a message such as "Take procedures for access" or "Check the schedule" by, for example, voice or a display using a display panel in step S30.

The control unit 110 determines in step S31 whether the above-described non-permitted person has taken an action (including an action to avoid accessing etc.) in response to the message. If the above-described non-permitted person has taken an action in response to the message, the processing proceeds to step S28 to perform a monitoring termination. If the above-described non-permitted person has not taken an action in response to the message, the processing proceeds to step S32.

The processing also shifts to step S32 when a confirmation by face authentication could also not be made in the above-described step S24. It is when a confirmation of the authentication card 21 by the RFID reader 20 could not be made (step S23: No) and a confirmation by face authentication could also not be made (step S24: No) despite a person, vehicle driver, or vehicle being in the back facility such as a truck yard that the processing proceeds by way of the above-described step S24. It is when the person is not a suspicious person but a non-permitted person and a person who did not follow the instruction by the present digital find security system and is therefore treated like a suspicious person that the processing proceeds by way of the above-described step S29 to step S31.

The suspicious person/suspicious vehicle driver determination function unit 112 determines the person to be a suspicious person in step S32 to proceed to step S33 (Fig. 6).

In the case of a determination to be a suspicious person in the above-described step S32, in step S33, the control unit 110 acquires positional information of an employee who approached the suspicious person from the position determination unit 113.

In step S34, the control unit 110 determines the position of a mobile terminal device 30 close to the suspicious person based on the acquired positional information.

In step S35, the identified person tracking unit 115 of the control unit 110 tracks movement of the suspicious person.

In step S36, the transmission control unit 116 of the control unit 110 transmits information regarding the suspicious person to an employee close to the position of the suspicious person. For example, the transmission control unit 116 transmits a sound/a moving image/positional information of the suspicious person (information of a back facility layout having marking thereon) by e-mail.

In this case, if the suspicious person distances himself/herself from the position of the close mobile terminal device 30 by a predetermined distance, the information regarding the suspicious person may be transmitted to another mobile terminal device 30.

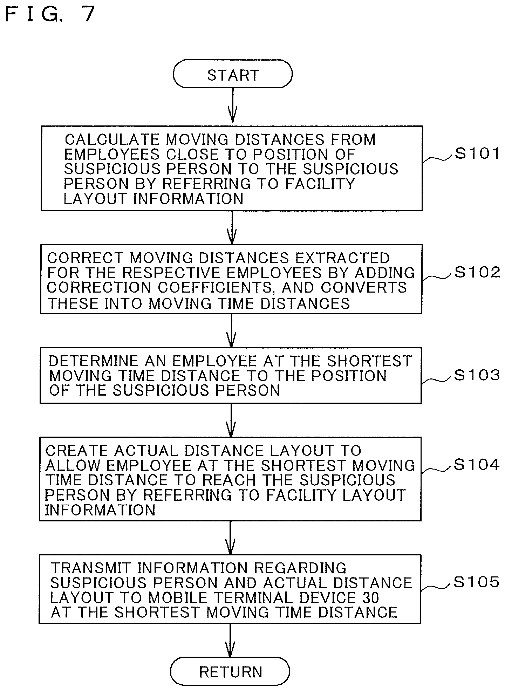

Fig. 7 is a flowchart showing a suspicious person information transmission processing of transmitting information regarding a suspicious person to an employee at the shortest moving time distance to a position of the suspicious person. The present flow corresponds to a subroutine of step S36 in Fig. 6. The present flow is performed by the control unit 110 (Fig. 2) of the monitoring device 100.

The control unit 110 determines a position of a mobile terminal device 30 close to the suspicious person (event point) based on acquired positional information (refer to step S34 in Fig. 6). However, even when an attempt is made to make a report to an employee close to the position of the suspicious person, depending on a state of facility layout, etc., and the employee's attribute, this employee cannot always rush to the scene. Therefore, the control unit 110 performs control to make a report to a mobile terminal device 30 at the shortest moving distance based on layout information.

First, in step S101, the control unit 110 refers to facility layout information stored in the layout information storage unit 114A, and calculates moving distances between a suspicious person and respective employees close to a position of the suspicious person on the facility layout. The respective employees close to the position of the suspicious person are a plurality of higher-ranking employees extracted in ascending order of direct distance. For example, a plurality (for example, five people) of candidates who are to be informed from the monitoring device 100 are extracted.

In step S102, the control unit 110 corrects moving distances extracted for the respective employees by adding correction coefficients thereto and converts these into moving time distances. That is, in principle, the control unit 110 makes a report to an employee at the shortest moving distance to a suspicious person by referring to facility layout information. However, the shortest moving distance does not always mean the shortest in time. For example, (1) factors due to a facility layout are, between a suspicious person and an employee, stairs (upstairs/downstairs), doors (push/open), corners, and narrow passages, etc. (2) Environmental factors are raining and snowing. (3) Personal factors are personal information such as moving speeds of respective persons, and wearing of skirt/slacks.

In the present embodiment, moving distances that respective employees move to a position of a suspicious person are converted into moving time distances, and corrected by adding correction coefficients. For example, a moving time distance T is calculated according to the following equation (1)

$$T = T_0 + T_1 + T_2 + T_3 \ldots (1).$$

$T_0$: basic time obtained by converting a moving distance on facility layout into a moving time distance
$T_1$: correction coefficient due to layout (a1, a2 ...)
$T_2$: correction coefficient due to environment (b1,

b2 ...)
$T_3$: correction coefficient due to personal information (c1, c2 ...)

As the correction coefficient $T_1$, a1: upstairs (plus 2 points), a2: downstairs (plus 1 point), a3: a push door (plus 1 point), a4: a pull door (plus 2 points), a5: a corner (plus 1 point), a6: a narrow passage (plus 1 point) ... are added by numbers of these present in a route. As the correction coefficient $T_2$, b1: raining/snowing (plus 1 point) ... is added when a corresponding route is open-air. As the correction coefficient $T_3$, c1: male (0 point), c2: female (plus 1 point), c3: a person who moves slow, registered in advance (plus 2 points), c4: wearing a skirt (plus 1 point), c5: wearing slacks (0 point) ... are added. Information for calculating the correction coefficient $T_1$ is read from the layout information storage unit 114A. Information for calculating the correction coefficient $T_3$ is read from the employee information storage unit 114B.

The correction coefficients $T_1$, $T_2$, and $T_3$ are added after the basic time $T_0$ is normalized, for example, to 1. For example, when it is assumed that a moving time distance T of an employee A is calculated to be "1. 21, " a moving time distance T of an employee B is calculated to be "1.15," a moving time distance T of an employee C is calculated to be "1.07," and a moving time distance T of an employee D is calculated to be "1.52," an employee at the shortest moving time distance to a suspicious person is the employee C. Even if the employee B is closest as a result of simple collation among moving distances on the facility layout, a report is made not to the employee B but to the employee C at the shortest moving time distance.

Conversion of correction coefficients into moving time distances and correction of the moving time distances are set in advance according to the facility layout and employees. The correction method and correction coefficients described above are just examples, and the correction method and correction coefficients are not limited to these.

In step S103, the control unit 110 determines an employee at the shortest moving time distance to a position of a suspicious person.

In step S104, by referring to facility layout information stored in the layout information storage unit 114A, the control unit 110 draws a shortest moving route for making the employee at the shortest moving time distance reach the suspicious person as an actual distance layout on the facility layout.

In step S105, the control unit 110 transmits the actual distance layout showing the shortest moving route together with information regarding the suspicious person to a mobile terminal device 30 at the shortest moving time distance.

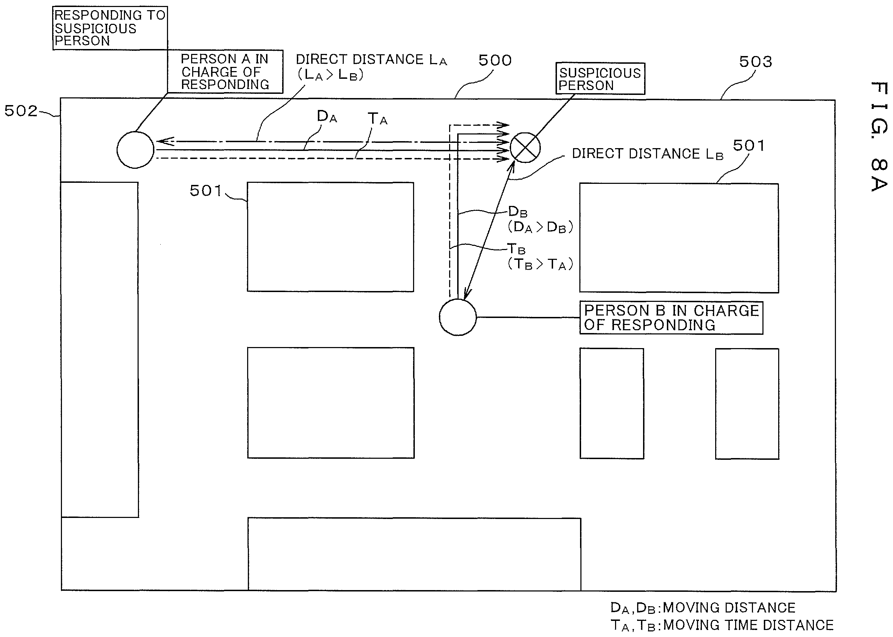

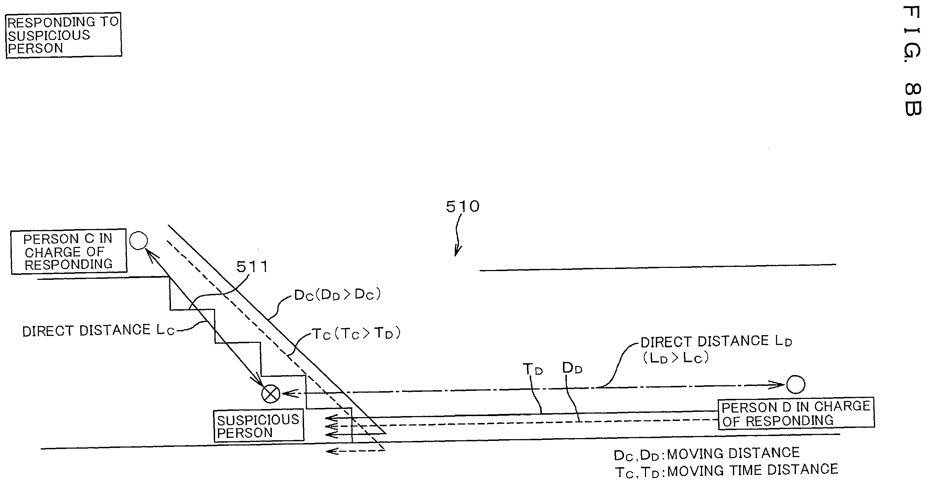

Fig. 8A and Fig. 8B are views describing responding to a suspicious person.

As shown in Fig. 8A, on the floor 500, a plurality of store shelves 501 are installed. Near an entrance/exit 502 of the floor 500 (upper left in Fig. 8A), a person A in charge of responding is present, and in an aisle between the store shelf 501 and the store shelf 501, a person B in charge of responding is present. It is assumed that a suspicious person (refer to the cross mark) has been found in an aisle between the store shelf 501 and a wall 503. The person A in charge of responding can see the suspicious person straight ahead when the person A in charge of responding stands with his/her back against the entrance/exit 502. The person B in charge of responding cannot directly see the suspicious person due to the store shelf 502 on the right. However, as shown by the solid line arrows in Fig. 8A, on the facility layout, the moving distance $D_B$ from the person B in charge of responding to the suspicious person is shorter than the moving distance $D_A$ from the person A in charge of responding to the suspicious person ($D_A > D_B$).

As shown by the alternate long and short dashed line arrows in Fig. 8A, observing direct distances from the persons A and B in charge of responding to the suspicious person, the direct distance $L_B$ from the person B in charge of responding to the suspicious person is shorter than the direct distance $L_A$ from the person A in charge of responding to the suspicious person. Conventionally, a report is made to the person B in charge of responding at the shortest direct distance, and when an answer-back of response inability is returned, a report is made to the second closest person A in charge of responding. However, as shown in Fig. 8A, observing actual moving distances (specifically, moving time distances), the person A in charge of responding is closer to the suspicious person (event point) . Conventionally, a report is made not to the person A in charge of responding whose moving time is actually shortest but to the person B in charge of responding, so that responding is delayed. The inventor of the present invention focused not on their direct distances but on actual reaching distances (times).

In this example, the moving distances $D_A$ and $D_B$ that the persons A and B in charge of responding move to the suspicious person are converted into moving time distances $T_A$ and $T_B$ and corrected by adding correction coefficients. In this case, on the way from the person B in charge of responding to the position of the suspicious person, a corner is present, so that correction for corresponding delay is applied. As a result, the moving time distance $T_A$ from the person A in charge of responding to the suspicious person becomes shorter than the moving time distance $T_B$ from the person B in charge of responding to the suspicious person ($T_B > T_A$), and this result is reverse to the case of collation between the moving distance $D_A$ and $D_B$. That is, as shown by the moving time distances shown by the dashed line arrows in Fig. 8A, the person B in charge of responding at the shorter distance needs more time than the person A in charge of responding ($T_B > T_A$).

In the situation shown in Fig. 8A, a report is made to the person A in charge of responding at the shorter moving time distance. The person A in charge of responding at the shorter moving time distance can respond to the location of the suspicious person earlier. Incidentally, in a mode in which the moving time distance conversion and correction are not performed, a report is made to the person B in charge of responding at the shorter moving distance to the suspicious person, so that responding is slightly delayed.

As shown in Fig. 8B, on the floor 510, stairs 511 are present, and at the top of the stairs 511, a person C in charge of responding is present, and at the inner side of the stairs 511 on the floor 510 (right end in Fig. 8B), a person D in charge of responding is present. It is assumed that a suspicious person (refer to the cross mark) has been found on the left side of the bottom of the stairs 511. When the person D in charge of responding looks towards the stairs 511, he/she sees the suspicious person on the left side of the bottom of the stairs 511. The person C in charge of responding cannot directly see the suspicious person unless he/she descends the stairs 511. As shown by the solid line arrows in Fig. 8B, in a planar view of the facility layout, the moving distance $D_C$ from the person C in charge of responding to the suspicious person is shorter than the moving distance $D_D$ from the person D in charge of responding to the suspicious person ($D_D > D_C$).

As shown by the alternate long and short dashed line arrow in Fig. 8B, observing the direct distances from the persons C and D in charge of responding to the suspicious person, the direct distance $L_C$ from the person C in charge of responding to the suspicious person is shorter than the direct distance $L_D$ from the person D in charge of responding to the suspicious person. However, as shown in Fig. 8B, in terms of the actual moving distances (specifically, moving time distances), the person D in charge of responding is closer to the suspicious person (event point).

In this example, the moving distances $D_C$ and $D_D$ of the persons C and D in charge of responding to the position of the suspicious person are converted into moving time distances $T_C$ and $T_D$, and corrected by adding correction coefficients. In this case, on the way from the person C in charge of responding to the position of the suspicious person, stairs 511 are present. The person C in charge of responding needs to descend the stairs 511, so that the person needs more time when he/she rushes down from the second floor than when he/she rushes from the first floor. As a result, the moving time distance $T_D$ from the person D in charge of responding to the suspicious person is shorter than the moving time distance $T_C$ from the person C in charge of responding to the suspicious person ($T_C > T_D$), and this result is reverse to the case of collation between the moving distances $D_C$ and $D_D$. That is, as shown by the moving time distances shown by the dashed line arrows in Fig. 8B, the person C in charge of responding at the shorter distance needs more time than the person D in charge of responding ($T_C > T_D$).

In the situation shown in Fig. 8B, a report is made to the person D in charge of responding at the shorter moving time distance. The person D in charge of responding at the shorter moving time distance can respond to the location of the suspicious person earlier. Incidentally, assuming a case where the suspicious person is at the top of the stairs 511, and the person C in charge of responding is on the left side of the bottom of the stairs 511, the person C in charge of responding and the person C in charge of responding equally climb the stairs 511, however, the person D in charge of responding does not need to go around the stairs 511, and accordingly, the moving time distance $T_D$ of the person D in charge of responding is shorter than the moving time distance of the person C in charge of responding.

Responding to a suspicious person is described above by way of example, and the same applies to responding to a fire alarm (event point) in place of a suspicious person.

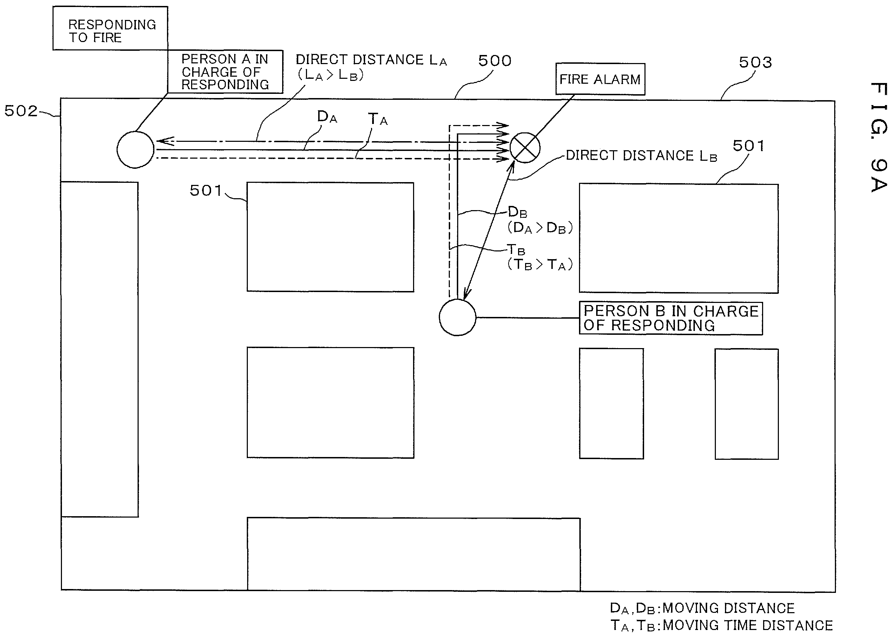

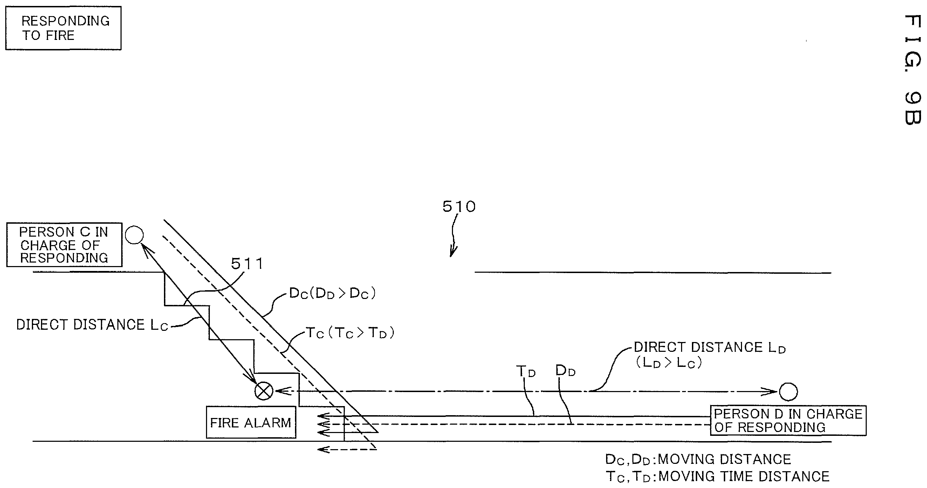

Fig. 9A and Fig. 9B are views describing responding to a fire, and respectively correspond to Fig. 8A and Fig. 8B. The same portions as in Fig. 8A and Fig. 8B are designated by the same signs.

The cross mark in Fig. 9A denotes a fire alarm installed at a location near a fire occurrence location on the floor 500.

For the same reason as described in Fig. 8A, as shown by the moving time distances shown by the dashed line arrows in Fig. 9A, the person B in charge of responding at the shorter direct distance needs more time than the person A in charge of responding ($T_B > T_A$). Therefore, the person A in charge of responding at the shorter moving time distance can respond to the location of the fire alarm (refer to the cross mark) earlier.

The cross mark in Fig. 9B denotes a fire alarm installed by the side of the stairs 511 near the fire occurrence location on the floor 510.

As described in Fig. 8B, the person C in charge of responding needs to descend the stairs 511, so that the moving time distance $T_D$ from the person D in charge of responding to the fire alarm is shorter than the moving time distance $T_C$ from the person C in charge of responding to the fire alarm. As shown by the moving time distances shown by the dashed line arrows in Fig. 9B, the person C in charge of responding at the shorter direct distance needs more time than the person D in charge of responding ($T_C > T_D$). Therefore, the person D in charge of responding at the shorter moving time distance can respond to the location of the fire alarm earlier.

When a small fire at an early stage of a fire, smoke, and heat breaks out in the facility, information regarding the small fire is found with a fire alarm panel, however, a real-time fire state and an image of the fire occurrence location are unknown, so that conventionally, real-time responding is not sufficient. In this digital find security system, whether a fire has broken out is always detected by a plurality (for example, 100) of fire alarms. The monitoring camera 11 receives a signal from a fire alarm that detects a fire and is activated, moves toward a range notified by the fire alarm, and shoots the notified range, and the position of the fire occurrence is identified from a position of flame or smoke in the shot image by using video information, moving distances, particularly preferably moving time distances between the identified position where a fire has broken out and a plurality of persons in charge of responding are respectively calculated based on facility layout information, and a person in charge of responding at the shortest moving distance is identified, and responding to the fire in the facility is promptly made in real time.

An e-mail message and an image are transmitted to a mobile terminal device of an employee or a fire-prevention manager closest to the fire occurrence location, and responding to the fire can be promptly made in real time.

A position of a person in charge of responding can be found by using positional information obtained by authentication of an authentication tag carried by this person in charge of responding with him/her by the RFID reader, and GPS positional information of the mobile terminal device carried by this person in charge of responding with him/her.

The present digital find security system transmits an image to a mobile terminal device of a person in charge of responding, so that without fear of failures in detection, the sensitivity of the fire alarm can be increased, that is, a fire detection temperature can be lowered so that even a case doubtful as a fire can be notified to a person in charge of responding. Therefore, in a case of a real fire, the fire can be detected and an alarm can be sent at an early stage, and it is possible to extremely promptly respond to the fire.

In the present system, even when an employee or a fire-prevention manager is absent in the above-described facility because of night time or absence from work, and is in a region distant from the facility, a fire alarm in this facility detects the fire occurrence location, an authentication camera turns toward the fire alarm at the fire occurrence location, and an image of fire occurrence is transmitted in real time to the employee, fire-prevention manager and security company, and the employee, fire-prevention manager and security company can confirm the fire occurrence state in the facility based on the image from a position distant from the facility even in night time, and check with concerned people urgently.

For responding to a suspicious person, the present system functions as described above with the authentication cameras, RFID readers, and GPS function.

An actual distance layout showing the shortest moving route includes an arrow showing the route to (way to reach) the scene inserted in the layout shown in, for example, Fig. 8A to Fig. 9B described above. The actual distance layout is created so that a person in charge of responding (employee) can know which route he/she goes on to reach a suspicious person or disaster prevention device earliest at a glance.

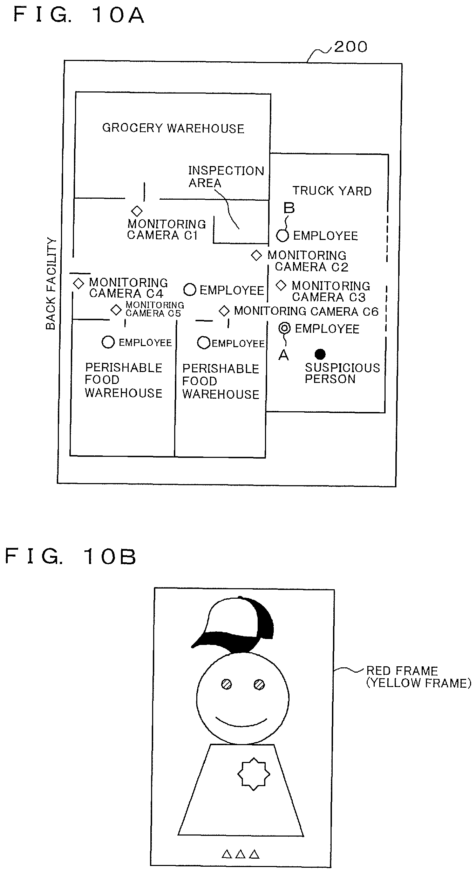

Fig. 10A and Fig. 10B are views of information on a suspicious person and a back facility layout 200 (surveillance target area) to be transmitted to an employee present at the closest position. As shown in Fig. 10A, there is information for which the suspicious person "● (filled circle)," the employee A "◎ (double circle)" present at a position at the shortest moving time distance to the suspicious person, and other employees B "○ (open circle)" including an employee at the second shortest moving time distance are plotted to overlap on the back facility layout 200 (surveillance target area). In this case, a person showing habitual suspicious behavior and a suspicious person may be shown in different colors by, for example, a red "● mark" and a yarrow "● mark," respectively, and doing this allows simply judging whether being a person showing habitual suspicious behavior or a mere suspicious person. Also, a sound and/or moving image regarding the suspicious person may be transmitted. Transmitting a sound and/or moving image together with an image allows knowing information that cannot be represented by only the image, enabling the employee to take more appropriate actions. In addition, the sound function may be in a mode of allowing selecting whether to release the sound depending on the situation.

Also, to the employee A "◎ (double circle) " present at the shortest moving time distance, more detailed information may be transmitted in order to monitor the suspicious person "● (filled circle)." Examples of the more detailed information include detailed information on the back facility layout 200 such as the floor-number name, back facility name, and corner name, information extracted from histories of the suspicious person, and guidelines for action to be taken by the employee. Also, as more detailed information, as shown in Fig. 10B, there can be information showing the suspicious person with his/her "face" enlarged and detailed information "△△△" on the suspicious person. In this case as well, a frame around the face of the person showing habitual suspicious behavior and a frame around a mere suspicious person may be shown in different colors of, for example, red and yellow, respectively. Transmitting the above-described detailed information has an effect of further promoting prevention of omission of monitoring and erroneous identification.

Returning to the flow in Fig. 6, in step S37, the transmission control unit 116 determines if there is no answer-back signal (acknowledgement: ACK) even after an elapse of a predetermined time (for example, five seconds) from transmitting the information regarding the suspicious person to a mobile terminal device 30 of an employee present at the shortest moving time distance or if an answer-back of response inability (negative-acknowledgement: NCK) has been returned from the mobile terminal device 30.

If there is no acknowledgement ACK even after an elapse of a predetermined time (for example, five seconds) from the mobile terminal device 30 or if a negative-acknowledgement NCK is returned from the mobile terminal device 30, the transmission control unit 116 determines the position of a mobile terminal device 30 the second closest, that is, at the second shortest moving time distance to the suspicious person, and transmits the information regarding the suspicious person to said mobile terminal device 30 in step S38.

The answer-back to be executed by the above-described employee is, specifically, if having received the information regarding the suspicious person transmitted from the monitoring device 100, performing an operation of touching (or depressing) a predetermined button (for example, an "ANSWER-BACK" button) of the mobile terminal device 30 (smartphone 30a, tablet 30b, or notebook PC 30c) in a preset time (for example, five seconds). In response to this operation, the mobile terminal device 30 returns an answer-back (answer-back signal) to the monitoring device 100, judging that the information on the suspicious person has been received and said employee has performed a checking operation.

As above, if there is no acknowledgement ACK even after an elapse of a predetermined time (for example, five seconds) from the mobile terminal device 30 or if an answer-back of response inability of a negative-acknowledgement NCK has been returned from said mobile terminal device 30, the transmission control unit 116 chooses a second employee concerned person to perform a re-transmission to him/her. The second employee concerned person is (1) a concerned person such as an employee who is at the second shortest moving distance to the suspicious person, (2) a security guard, a store manager, an assistant store manager, (3) the headquarters/head office affiliates, or the like.

In step S39, the transmission control unit 116 transmits the information regarding the suspicious person to the mobile terminal device 30 of the headquarters/head office or security company.

In step S40, the control unit 110 determines whether the person identified as a suspicious vehicle driver is trying to drive out of the surveillance area.

If the person identified as a suspicious vehicle driver is trying to drive out of the surveillance area, the control unit 110 activates the vehicle stopper device 50 in step S41 and hinders the suspicious vehicle's driving away therefrom to end the present flow. If the suspicious vehicle driver is not trying to drive out of the surveillance area, the control unit 110 directly ends the present flow.

[Monitoring control of mobile terminal device 30]

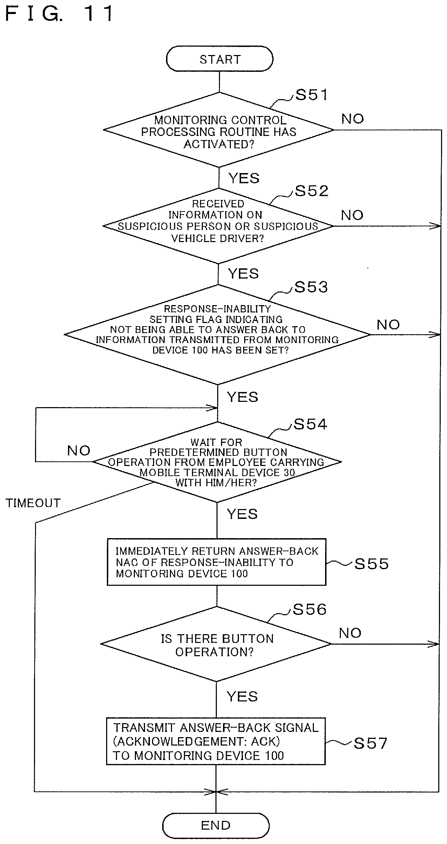

Fig. 11 is a flowchart showing a monitoring control processing of the mobile terminal device 30 of the digital find security system. The present flow is executed by the control unit (not shown) of the mobile terminal device 30.

First, the control unit of the mobile terminal device 30 determines in step S51 whether the present monitoring control processing routine has been activated, and directly ends the present flow if the present monitoring control processing routine has not been activated.

If the present monitoring control processing routine has been activated, the control unit of the mobile terminal device 30 determines in step S52 whether it has received information on a suspicious person transmitted from the monitoring device 100.

If having not received the information on a suspicious person described above, the control unit of the mobile terminal device 30 directly ends the present flow.

If the information on a suspicious person described above has been received, the response-inability setting unit of the mobile terminal device 30 determines in step S53 whether a response-inability setting flag indicating not being able to answer back to information transmitted from the monitoring device 100 has been set. In addition, the setting of the response-inability setting flag may be, for example, completed by holding down a predetermined button during the present monitoring control processing routine is being activated, and cancelled by again holding down the predetermined button after the completion of setting.

If the response-inability setting flag has been set, the response-inability setting unit of the mobile terminal device 30 immediately returns an answer-back NAC of response inability to the monitoring device 100 in step S54 to end the present flow.

If the response-inability setting flag has not been set, the control unit of the mobile terminal device 30 waits for a predetermined button (for example, a "ANSWER-BACK" button) operation from an employee carrying this mobile terminal device 30 with him/her in step S55.

If there is a button operation described above, the control unit of the mobile terminal device 30 transmits an answer-back signal (acknowledgement: ACK) to the monitoring device 100 in step S56 to end the present flow. In addition, if there is no button operation even after an elapse of a predetermined time, the control unit of the mobile terminal device 30 performs a timeout in step S57 to end the present flow.

[Application example 1]

Description will now be given, in the case of a back facility of a commercial facility, of a back facility configuration of the digital find security system 1000.

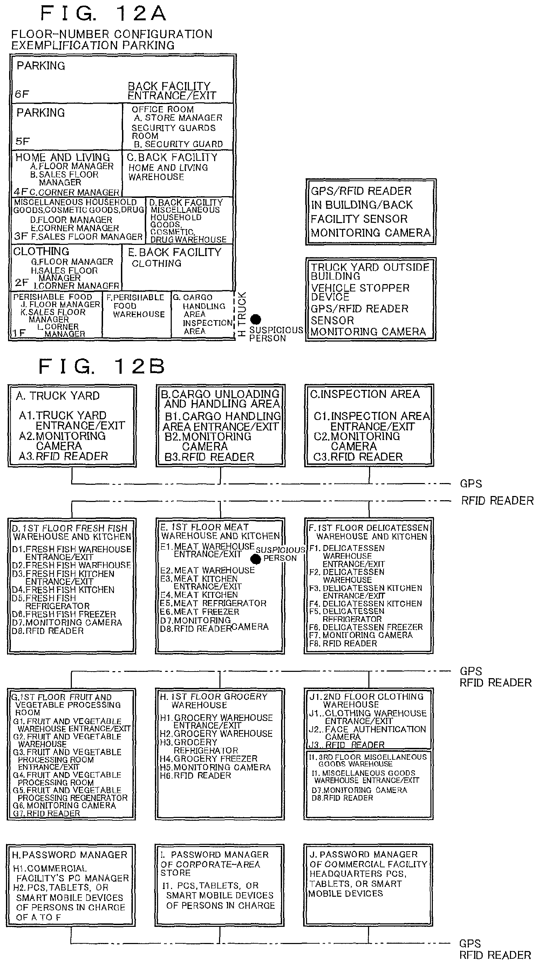

Fig. 12A and Fig. 12B are views showing an example of a back facility layout of the digital find security system.

In the digital find security system 1000, the monitoring device 100 stores back facility layout positional information, positional information of the RFID readers 20 on the back facility layout 200, and employees' positional information acquired by the RFID readers 20.

In the back facility, the monitoring cameras 11 and the RFID readers 20 are respectively installed. If GPS radio waves are unstable and the radio waves do not reach, positional information can be acquired by the RFID reader 20.

The monitoring device 100, if having recognized a suspicious person by the monitoring camera 11, displays on a back facility layout of the display unit 140 where the suspicious person is present in terms of floor number, entrance, back facility name, and corner (refer to Fig. 10) name.

When a suspicious person comes to a store, the monitoring device 100 recognizes positional information by the monitoring camera 11. Then, the monitoring device 100 recognizes positional information of a back facility manager, security guards, and a store manager by the GPS function or RFID readers 20. Accordingly, the monitoring device 100 determines which employees are close to the suspicious person, and transmits information on the suspicious person (positional information, shot images, and a face image, etc.) together with an e-mail message, a moving image, and a back facility layout in real time to an employee at the shortest moving time distance to the suspicious person. The employee close to the suspicious person can rush thereto and prevent an act of theft and the like, by making a proper response quickly in advance.

After transmitting information on the suspicious person (positional information, shot images, and a face image, etc.) together with an e-mail message, a moving image, and a back facility layout in real time to an employee at the shortest moving time distance to the suspicious person, the monitoring device 100 may transmit simple information not only to this employee but also to employees at a nearby entrance/exit and back facility corner and on the same floor, or security guards and a store manager as necessary.

Conversely, the monitoring device 100 may transmit more detailed information to the employee at the shortest moving time distance described above. Examples of the more detailed information include information for which positional information of the intruder and employee is displayed to overlap a floor-number name, back facility name and corner name layout drawing, and information showing the intruder with his/her "face" enlarged. This has an effect of preventing omission of monitoring and erroneous identification.

In a building where GPS radio waves can be received, employees' positional information is acquired using a GPS function. In a building, back facility, and the like where GPS radio waves cannot be received, employees' positional information is acquired by the RFID readers 20.

The monitoring cameras 11 are preferably installed in a plurality of numbers where not in direct sight of employees, aisles, etc.

The monitoring device 100 has stored in advance positional information by the monitoring cameras 11, a corresponding floor number, back facility, floor, entrance/exit, and recognized person(s) to be searched, and a range in which the monitoring cameras 11 can authenticate intruders. For example, the monitoring device 100 stores a floor-number name, a back facility name, a corner name, and a back facility layout. An employee can rush to the place of a corresponding suspicious person.

For example, in Fig. 12A, when a person approaches the cargo handling area/inspection area the entrance/exit of which faces a truck yard, an employee who possesses the authentication card 21 to be authenticated by the RFID reader 20 can gain access thereto because it is a permitted area for him/her.

The monitoring device 100 identifies a person other than the person described above as a suspicious person, and transmits layout information on which the position of the suspicious person is presented to the mobile terminal device 30 (smartphone 30a, tablet 30b, or notebook PC 30c) of an employee at the shortest moving time distance to the suspicious person. The employee to which the information was transmitted can rush to the scene of the back facility and prevent theft and the like in advance.

If the suspicious person has left the back facility, the monitoring device 100 likewise transmits information indicating that he/she has left to an employee(s) concerned.

Also, the monitoring device 100 activates the vehicle stopper device 50 if the person identified as a suspicious vehicle driver is trying to drive out of the surveillance area. This hinders the suspicious vehicle's driving away therefrom to prevent theft by the vehicle.

Likewise, in Fig. 12B, when a person approaches the fresh fish warehouse entrance/exit on the first floor to the miscellaneous goods warehouse entrance/exit on the third floor, an employee who possesses the authentication card 21 to be authenticated by the RFID reader 20 can gain access thereto to work. In the case of a person who does not possess the authentication card 21, he/she is identified as a suspicious person, and the monitoring device 100 transmits layout information on which the position of the suspicious person is presented in real time to the mobile terminal device 30 (smartphone 30a, tablet 30b, or notebook PC 30c) of an employee at the shortest moving time distance to the suspicious person.

The back facility such as the office room or money accounting office room can likewise be monitored against suspicious persons.

Also, as for factory laboratories, offices, and the like other than commercial facilities, when a person approaches an entrance/exit outside its building or on the periphery thereof, an employee who possesses the authentication card 21 to be authenticated by the RFID reader 20 can gain access thereto because it is a permitted area for him/her. In terms of a person who has not obtained permission, layout information on which his/her position is transmitted in real time. In this case, an alarm may be sent or a door may be locked not to allow access. In addition, locking and unlocking is managed by a security guard, an employee, or a PC password holder at a security guards room.

Hereinafter, a specific function of the digital find security system shown in Fig. 12A will be described.

A person who arrived in a vehicle at a back area tries to make delivery by entering a cargo handling area/inspection area or the like.

If the person is a suspicious person who does not possesses the authentication card 21 or whose face image has not been registered, the monitoring device 100 transmits information (including a moving image) regarding the suspicious person and back facility layout information on which the floor number, the cargo handling area, the warehouse name, the room name, and the suspicious person are presented in real time to a security guards room PC, a tablet, and the mobile terminal device 30 (smartphone 30a, tablet 30b, or notebook PC 30c) of an employee(s) concerned.

On the other hand, if the person is a person concerned permitted access to rooms and warehouses of the back facility and possesses the authentication card 21 or is an employee (for example, a store manager, an assistant store manager, a floor manager, a perishable food manager, a clothing manager, a miscellaneous household goods manager, a home and living manager, a security guard, a person in charge of each section, an office room person in charge, a person in charge of money accounting, or a person in charge of inspections) having already been registered for face authentication by the monitoring camera 11, he/she can gain access. In this case, it is preferable to allow access in a divided manner by access permission by operations. It is preferable to limit a section or rooms to which access is allowed only for persons who have job responsibility in or in charge of the section, or to limit a section to which permission to access has been obtained in the case of a delivery by an outsider.

When a person who has not obtained permission tries to gain access, the monitoring device 100 determines that the person is a suspicious person and performs transmission to an employee (s) concerned as described above. It is also possible, when the suspicious person tries to access each room or each warehouse, to lock the door of an entrance/exit so as not to allow the access.

When an operator who came for a delivery tries to access a warehouse other than a warehouse(s) to which permission has been obtained, the monitoring device 100, if the operator does not possess the authentication card 21 to be authenticated by the RFID reader 20 or face authentication by the monitoring camera 11 cannot be performed, transmits information regarding the suspicious person in real time to the mobile terminal device of a security guard or employee concerned present in the inspection area. In this case, the monitoring device 100 makes an alarm system provided at an outdoor entrance/exit sound. Also, the monitoring device 100 activates the vehicle stopper device 50 so as not to allow the suspicious person's vehicle to drive out of the back facility.

In the present embodiment, a transmission level of information regarding a suspicious person may be preset. For example, whether to perform transmission to a person in charge of management or responsible person of area headquarters or a head office can be set.

As above, the digital find security system, if a suspicious person is found by the RFID reader 20 or the monitoring camera 11 installed in a back facility, by an e-mail message including a moving image, presents information regarding the suspicious person on a back facility layout, and transmits the same first to an employee close to the suspicious person and then to respective responsible persons.

If the employee (responsible person) close to the suspicious person does not receive an action of checking the e-mail message for some reason for a predetermined time (for a few seconds) or an answer-back that no return will be sent is received, an e-mail message is transmitted to a responsible person the second closest to the suspicious person. In this case, transmitting the e-mail message also to a person in charge of security and/or the store manager allows the person in charge of security and/or store manager having received the e-mail message to make instructions and respond to respective persons in charge by a more professional/superior judgement. In addition, the digital find security system has stored in advance the positions of the store manager, the assistant store manager, persons in charge of security, back facility responsible persons, and corner managers by a GPS or the RFID readers 20.

[Application example 2]

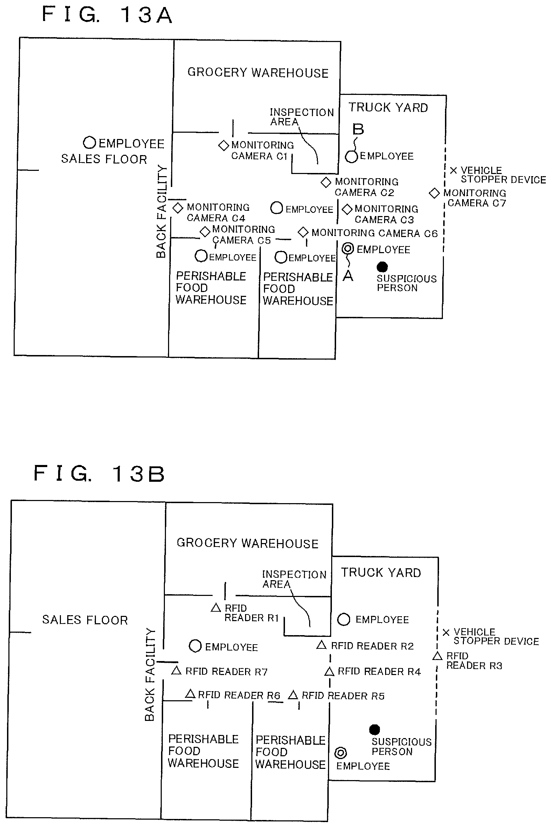

Fig. 13 includes views showing an example of a back facility layout of the digital find security system. Fig. 13A is a first-floor back facility planar layout by a GPS and an arrangement plan of monitoring cameras 11, and Fig. 13B is a first-floor back facility planar layout by "△ marks" of RFID readers and an arrangement plan of monitoring cameras. In addition, other respective floors also have almost the same back facility layout.

As shown in Fig. 13A, it is assumed that a suspicious person "● (filled circle) " has parked his/her vehicle in a truck yard of a back facility and disguised himself/herself as a client concerned person while blending into the back facility. The entrances/exits of a warehouse, cargo handling area, inspection area, and refrigerator/freezer of the back facility are installed with the monitoring cameras 11, and it is determined whether a face image of a person shot by the monitoring camera 11 matches any of the face images of employees such as store concerned persons, registered persons with RFID authentication cards, and employee concerned persons, and the person is determined to be a suspicious person if the face image does not match any thereof. Then, information (refer to Fig. 10A) on the suspicious person is transmitted to the mobile terminal device 30 (smartphone 30a, tablet 30b, or notebook PC 30c) an employee "◎ (double circle) " at the shortest moving time distance to the suspicious person carries with him/her.

Here, the information on the suspicious person has been overlapped on the back facility layout 200. If the suspicious person is a person showing habitual suspicious behavior, the person is shown by a red "● mark." An employee "◎ (double circle)" at the shortest moving time distance to the suspicious person can shift to a monitoring action from the very first when he/she came to the store, which is the most important, to restrain the suspicious person "● (filled circle)" from an initial motion, thereby preventing an act of theft and the like. Moreover, transmitting to the other employees concerned "○ (open circle)" an e-mail message, a moving image, and information regarding the suspicious person presenting a back facility layout by e-mail allows more effectively preventing an act of theft.

Doing this allows track monitoring even in a case that the suspicious person "● (filled circle)" takes action such as moving around the back facility using a cart or a case that there is a plurality of suspicious persons "● (filled circle)," thereby more effectively dealing with the case for preventing an act of theft.

As shown in Fig. 13B, in a truck yard of a back facility, the RFID readers 20 are installed, and if a person is authenticated to be a suspicious person who does not possess the authentication card 21 to be authenticated by the RFID reader 20, when the person accesses the truck yard, the inspection area, the cargo handling area, and/or the warehouse on each floor, the corresponding location name is presented on a back facility layout and transmitted together with positional information of the suspicious person to an employee "◎ (double circle)" at the shortest moving time distance to the suspicious person.

As above, when a person who does not possess the authentication card 21 to be authenticated by the RFID reader 20 accesses a back facility including a truck yard, information regarding the suspicious person is presented on a back facility layout and this is transmitted to a smart mobile device of an employee present at the shortest moving time distance to the suspicious person. The employee can rush to the location of the suspicious person and prevent theft and other cases in advance. On the back facility layout, the floor number, the section and warehouse name, the cargo handling area, the truck yard, the refrigerator/freezer name, the inspection area, etc., are presented, which allows an employee concerned to immediately rush to the scene to be on guard.

The person showing habitual suspicious behavior is a person who has committed theft or an act akin thereto and thus recorded, and the suspicious person is a person who has accessed a no-entry back facility such as the inspection area, cargo handling area, warehouses, and/or refrigerator/freezer of a back facility without permission. When any of these enters the back facility, the person is regarded as a suspicious person and information regarding the suspicious person is transmitted to a smart mobile device of an employee present at the shortest moving time distance to the suspicious person. Further, the transmission may be performed to a PC at a security guards room or a smart mobile device of a responsible employee concerned. This allows preventing theft, tampering, and leakage of corporate information in real time.

Further, even when a person showing habitual suspicious behavior or a suspicious person tries to access each room, the door may be prevented from opening not to allow his/her access. Accordingly, even when a person tries to gain access by threatening an employee, the person cannot gain access because of a collation result if he/she is not a previously registered concerned employee.

The present digital find security system allows determining access concerned persons for that room depending on the intended use, work type and the degree of information of each workplace, the office room or each room. Even among those who possess the authentication cards 21, only a permitted concerned person's access is allowed. When non-permitted, another concerned person or an outsider tries to gain access, information is transmitted to an employee present at the shortest moving time distance to him/her as treatment as a quasi-suspicious person. This allows an employee concerned or security guard to rush thereto.

Also, according to the present digital find security system, even when a non-permitted suspicious person enters each workplace, the office room, each warehouse, the refrigerator/freezer, or the like without permission, the monitoring camera 11 installed in each room or each warehouse activates in an interlocked manner so as to transmit back facility layout information on which the floor number and each room name or each warehouse name are presented in real time to the mobile device of an employee concerned present at the shortest moving time distance to him/her. This allows preventing theft, tampering, and leakage of corporate information from occurring.

Also, to each factory, each warehouse, each workplace, and each room in a building facility, predetermined personnel are permitted to gain access in accordance with an operation schedule including days of the week and working hours to perform operations. According to the present digital find security system, if a person tries to gain access without permission outside of the operation schedule, this is detected by the RFID reader 20 and the monitoring camera 11, and if the accessor has obtained permission for his/her unscheduled access is determined, and a person who has not obtained permission is regarded as a suspicious person and transmitted together with the suspicious person's image (including a moving image), a corresponding room name, floor number, workplace, factory name, and/or the like in real time to the mobile terminal device 30 (smartphone 30a, tablet 30b, or notebook PC 30c) of a concerned person or security guard present at the shortest moving time distance to him/her. This allows an employee concerned to rush to the scene and report to a jurisdictional police station. But, when access is necessary because of urgency, the access may be exceptionally allowed by an administrator, a security guard, or the like contacting the concerned and canceling the present monitoring control.

Also, the transmission can also be performed in a distinguishable manner between a suspicious person being a person who has not been registered for face authentication by the monitoring camera 11 or a person who does not possess the authentication card 21 to be authenticated by the RFID reader 20 and a person showing habitual suspicious behavior. For example, a suspicious person is displayed in a yellow frame, and a person showing habitual suspicious behavior is displayed in a red frame.

In addition, commercial facilities, factories, laboratories, head offices, etc., that are large scale include large scale facilities on the order of 50 m x 200 m per floor and on the order of 30, 000 to 300, 000 $m^2$ with three to four floors, and to any of these, the present system can respond. Also, the present system can respond to small convenience stores and malls, respective terminals, complex building hospitals, hotels, cultural facilities, skyscrapers, etc., as well.

As described above in detail, according to the present embodiment, in the digital find security system 1000, the control unit 110 refers to facility layout information stored in the layout information storage unit 114A, and calculates moving distances between a suspicious person and respective mobile terminal devices 30 close to a position of the suspicious person on a facility layout. Then, the control unit 110 corrects the moving distances extracted for the respective employees by adding correction coefficients and converts these into moving time distances, and transmits information regarding the suspicious person to a mobile terminal device 30 at the shortest moving time distance to the position of the suspicious person.

According to this configuration, based not on moving distances on the layout but on moving time distances that an employee travels until actually reaching the scene, a report is reliably made to an employee at the shortest moving time distance, so that the employee can more promptly rush to the scene.

When converting moving distances into moving time distances, the control unit 110 corrects the moving time distances (by using correction coefficients showing presences of upstairs/downstairs of stairs, a corner, pushing/pulling of a push door, a human speed factor, and wearing a cloth suitable for moving, etc.), so that moving time distances that an employee travels until actually reaching the scene can be more accurately calculated, and an employee at the shortest moving time distance can promptly rush to the scene.

Since the control unit 110 creates an actual distance layout of a shortest moving route based on layout information and transmits this actual distance layout to the mobile terminal device at the shortest moving distance, an employee who receives the actual distance layout can rush to the scene while referring to the actual distance layout.

Also, in the present embodiment, the mobile terminal device 30 includes the response-inability setting unit that presets not being able to answer back to information transmitted from the control unit 110, and when the response-inability setting unit has set being in response inability, returns an answer-back of said response inability if transmission of information is received from the monitoring device 100. Accordingly, the monitoring device 100 can transmit the above-described information to an employee or responsible person at the second shortest moving time distance without waiting for an answer-back from the mobile terminal device 30 for a predetermined time (for example, five seconds). Theft is a split-second act, so the effect of being able to be supported by the second-closest employee or responsible person without waiting for a predetermined time (for example, five seconds) is great. That is, the digital find security system 1000 can respond to a time-sensitive situation through collaboration of the monitoring device 100 and the mobile terminal device 30.

In actual operation, employees may go to a warehouse or go to the bathroom, and thus do not always stay in fixed positions. For this reason, in the conventional system, reporting to an employee to whom a report is to be made has not been feasible in some cases. In the present embodiment, because the mobile terminal devices 30 can perform a setting for making the same report-off (meaning that the employee is in response inability for being in the bathroom or the like), there is no load on the side of the monitoring device 100.

Also, in the present embodiment, because it is determined if a person authenticated in a surveillance target area such as a back facility is gaining access to a specific place in the surveillance target area or at a previously specified time, access of a person who is not a suspicious person in the surveillance target area but is a person without permission to access a specific place or at a previously specified time can be monitored, so the security level in preventing an act of theft, tampering, leaking information, or the like can be increased.

Also, in the present embodiment, comprising the vehicle stopper device 50 that restricts a vehicle's movement and activating the vehicle stopper device 50 if a suspicious vehicle driver tries to drive out of a back facility allows hindering the suspicious vehicle that is trying to flee from a surveillance target area such as a back facility, so an act of theft and the like can be more strongly prevented.

The above description is an exemplification of preferred embodiments of the present invention, and the scope of the present invention is not limited thereto. For example, in the present embodiment, a description has been given of the case of using the telephone line as a public line, but the present invention is not limited to this case, and for example, a radio communication line, the Internet, or a LAN may be used as a public line. Moreover, the communication terminal may be used according to the type of the public line, such as a transceiver used as a communication terminal when the public line is radio communication, and a personal computer or a palmtop computer used as a communication terminal when the public line is the Internet or a LAN. Thus constructing a digital find security system using an existing public line allows expanding the usage form of a digital find security system and allows suppressing the construction costs of a digital find security system.

Moreover, the title of a digital find security system and method has been used in the present embodiment, but this is for convenience of description, and the title may be digital smart security, a crime-prevention system, a security method, or the like.

Further, detection of an abnormal situation covers all of publicly-known matters. Examples of the abnormal situation are intrusion or approach of a suspicious person(s). Also, the report may be any, without being limited to an e-mail message.

Also, a digital find security system and method of the present invention can also be realized by a program to operate a computer as the present digital find security system or method. This program may be stored in a storage medium that can be read by a computer.

This storage medium recorded with the program may be a ROM itself of the present digital find security system, or may be a storage medium such as a CD-ROM that can be read, when a program reading device such as a CD-ROM drive is provided as an external storage device, by inserting therein the storage medium.

Moreover, the above-described storage medium may be a magnetic tape, a cassette tape, a flexible disk, a hard disk, an MO/MD/DVD or the like, or a semiconductor memory.

All publications, patents and patent applications cited in the present specification are hereby incorporated by reference in their entirety.

[Industrial Applicability]

The digital find security system, method, and program according to the present invention provide real-time responses in corporate and commercial facilities, offices, and the like to prevent loss of property, life and economy, whereby providing great utilization effects.

[Reference Signs List]

11 monitoring camera
20 RFID reader
21 Authentication card

30 Mobile terminal device
40 GPS
50 Vehicle stopper device
100 Monitoring device
110 Control unit (control means)
111 Face authentication function unit
112 Suspicious person/suspicious vehicle driver determination function unit
113 Position determination unit (positional information acquiring means, position identifying means)
114A Layout information storage unit (layout information storing means)
114B Employee information storage unit
115 Identified person tracking unit
116 Transmission control unit
120 Input unit
130 Storage unit
140 Display unit
150 Output unit
160 Face information database (DB)
170 Image processing unit
180 Interface (I/F) unit
190 Communication unit
200 Back facility layout (surveillance target area)
1000 Digital find security system

**Claims**

1. A digital find security system to allow an employee to rush to an event point where a case has occurred in a surveillance target area, comprising:

    layout information storing means for storing facility layout information in the surveillance target area;
    positional information acquiring means for acquiring positional information of mobile terminal devices respectively carried by a plurality of employees with them in the surveillance target area;
    position identifying means for identifying a position of the event point in the surveillance target area; and
    control means for obtaining moving distances between acquired positions of the mobile terminal devices and an identified position of the event point based on the layout information, and making a report to the mobile terminal device at the shortest moving distance.

2. The digital find security system according to claim 1, wherein the control means converts the moving distances into moving time distances until the employees rush to the event point, and makes a report to the mobile terminal device at the shortest moving time distance.

3. The digital find security system according to claim 2, wherein the control means corrects the moving time distances based on personal information of the employees.

4. The digital find security system according to claim 1, wherein the control means creates an actual distance layout of the shortest moving route based on the layout information, and transmits the actual distance layout to the mobile terminal device at the shortest moving distance.

5. The digital find security system according to claim 2, wherein
the layout information includes stairs presence information, and
the moving time distance differs between a case of climbing stairs and a case of descending stairs.

6. The digital find security system according to claim 1, wherein the control means makes a report to the mobile terminal device at the second shortest moving distance in a case where the mobile terminal device at the shortest moving distance is set to be unable to respond.

7. A digital find security method to allow an employee to rush to an event point where a case has occurred in a surveillance target area, comprising:

    layout information storing step of storing facility layout information in the surveillance target area;
    positional information acquiring step of acquiring positional information of mobile terminal devices respectively carried by a plurality of employees with them in the surveillance target area;
    position identifying step of identifying a position of the event point in the surveillance target area; and
    control step of obtaining moving distances between acquired positions of the mobile terminal devices and an identified position of the event point based on the layout information, and making a report to the mobile terminal device at the shortest moving distance.

8. A program which makes a computer operate as a digital find security system that allows an employee to rush to an event point where a case has occurred in a surveillance target area, and comprises layout information storing means for storing facility layout information in the surveillance target area, positional information acquiring means for acquiring positional information of mobile terminal devices respectively carried by a plurality of employees with them in the surveillance target area, position identifying means for identifying a position of the event point in the surveillance target area, and control means for obtaining moving distances between acquired positions of the mobile terminal devices and an identified position of the event point based on the layout information, and making a report to the mobile terminal device at the shortest moving distance.

FIG. 1

FIG. 2

~110

CONTROL UNIT

~111
FACE
AUTHENTICATION
FUNCTION UNIT

~112
SUSPICIOUS PERSON/
SUSPICIOUS VEHICLE DRIVER
DETERMINATION FUNCTION UNIT

~113
POSITION
DETERMINATION UNIT

~114A
LAYOUT
INFORMATION
STORAGE UNIT

~115
IDENTIFIED PERSON
TRACKING UNIT

~116
TRANSMISSION
CONTROL UNIT

~114B
EMPLOYEE
INFORMATION
STORAGE UNIT

FIG. 3

START

REGISTER FACE INFORMATION OF PERSONS
ISSUED WITH RFID AUTHENTICATION CARDS ETC.,
IN FACE INFORMATION DB ~S1

REGISTER INFORMATION ON PERSONS
(SUSPICIOUS PERSONS) OTHER THAN PERSONS
ISSUED WITH RFID AUTHENTICATION CARDS ~S2

REGISTER DETAILED INFORMATION ON PERSONS
ISSUED WITH RFID AUTHENTICATION CARDS,
VEHICLES' LICENSE NUMBERS, AND RELATED
FACE INFORMATION ~S3

END

FIG. 4

START

REGISTER DISPOSITION POSITION
OF RESPECTIVE MONITORING
CAMERAS AND MONITORING
RANGE ~S11

REGISTER INSTALLATION POSITION
OF RESPECTIVE RFID READERS
AND DETECTION RANGE ~S12

REGISTER BACK FACILITY
LAYOUT INFORMATION ~S13

END

FIG. 5

START

S21
TAKE IN VIDEO OF MONITORING CAMERA

S22
PERSON OR VEHICLE HAS ENTERED SURVEILLANCE TARGET AREA?
NO
YES

S23
RFID-REGISTERED PERSON?
NO
YES

S24
MATCHED WITH CONCERNED PERSON'S FACE?
YES
NO

S25
MORE DETAILED ACCESS PERMISSION INFORMATION HAS BEEN SET FOR BACK FACILITY?
YES
NO

S26
CORRESPONDING PERSON WHO CAN GAIN ACCESS TO SPECIFIC PLACE OF BACK FACILITY OR AT SPECIFIC TIME OR THE LIKE THERETO?
YES

S27
DETERMINE HIM/HER NOT TO BE SUSPICIOUS PERSON BUT PERMITTED PERSON

S29
DETERMINE HIM/HER NOT TO BE SUSPICIOUS PERSON OR PERMITTED PERSON

S30
ISSUE MESSAGE

S31
ACTION RESPONDING TO MESSAGE HAS BEEN TAKEN?
YES
NO

S28
TERMINATE MONITORING CONTROL

S32
DETERMINE HIM/HER TO BE SUSPICIOUS PERSON

1

2

# FIG. 6

① ②

ACQUIRE POSITIONAL INFORMATION OF
EMPLOYEE WHO APPROACHED SUSPICIOUS
PERSON — S33

DETERMINE POSITION OF CLOSE MOBILE
TERMINAL DEVICE — S34

TRACK MOVEMENT OF SUSPICIOUS PERSON — S35

TRANSMIT INFORMATION
TO THE CLOSE EMPLOYEE — S36

S37
THERE IS NO ANSWER-BACK
SIGNAL OR ANSWER-BACK OF
RESPONSE-INABILITY HAS BEEN
RETURNED? — NO

YES

DETERMINE POSITION OF SECOND-CLOSEST
MOBILE TERMINAL DEVICE 30 AND
TRANSMIT INFORMATION — S38

TRANSMIT INFORMATION TO
HEADQUARTERS/HEAD OFFICE AND
SECURITY COMPANY — S39

S40
IS SUSPICIOUS PERSON
TRYING TO DRIVE OUT OF
SURVEILLANCE AREA? — NO

YES

ACTIVATE VEHICLE
STOPPER DEVICE — S41

END

F I G. 7

START

CALCULATE MOVING DISTANCES FROM EMPLOYEES CLOSE TO POSITION OF SUSPICIOUS PERSON TO THE SUSPICIOUS PERSON BY REFERRING TO FACILITY LAYOUT INFORMATION — S101

CORRECT MOVING DISTANCES EXTRACTED FOR THE RESPECTIVE EMPLOYEES BY ADDING CORRECTION COEFFICIENTS, AND CONVERTS THESE INTO MOVING TIME DISTANCES — S102

DETERMINE AN EMPLOYEE AT THE SHORTEST MOVING TIME DISTANCE TO THE POSITION OF THE SUSPICIOUS PERSON — S103

CREATE ACTUAL DISTANCE LAYOUT TO ALLOW EMPLOYEE AT THE SHORTEST MOVING TIME DISTANCE TO REACH THE SUSPICIOUS PERSON BY REFERRING TO FACILITY LAYOUT INFORMATION — S104

TRANSMIT INFORMATION REGARDING SUSPICIOUS PERSON AND ACTUAL DISTANCE LAYOUT TO MOBILE TERMINAL DEVICE 30 AT THE SHORTEST MOVING TIME DISTANCE — S105

RETURN

FIG. 8A

EP 3 239 947 A1

RESPONDING TO
SUSPICIOUS
PERSON

510

PERSON C IN
CHARGE OF
RESPONDING

511

$D_C (D_D > D_C)$

DIRECT DISTANCE $L_C$

$T_C (T_C > T_D)$

SUSPICIOUS
PERSON

DIRECT DISTANCE $L_D$
$(L_D > L_C)$

$T_D$  $D_D$

PERSON D IN CHARGE
OF RESPONDING

$D_C, D_D$ : MOVING DISTANCE
$T_C, T_D$ : MOVING TIME DISTANCE

EP 3 239 947 A1

D_A, D_B : MOVING DISTANCE
T_A, T_B : MOVING TIME DISTANCE

# FIG. 9B

RESPONDING TO FIRE

510

DIRECT DISTANCE $L_D$
($L_D > L_C$)

$D_D$

$T_D$

PERSON D IN CHARGE OF RESPONDING

$D_C, D_D$: MOVING DISTANCE
$T_C, T_D$: MOVING TIME DISTANCE

$D_C (D_D > D_C)$

$T_C (T_C > T_D)$

511

FIRE ALARM

PERSON C IN CHARGE OF RESPONDING

DIRECT DISTANCE $L_C$

## F I G. 1 0 A

## F I G. 1 0 B

F I G. 1 1

```
                    ( START )
                        |
                        | ╭S51
                        ▼
         ◇ MONITORING CONTROL ◇────NO────┐
         ◇ PROCESSING ROUTINE HAS ◇        |
         ◇    ACTIVATED?     ◇             |
                        |                   |
                       YES                  |
                        | ╭S52             |
                        ▼                   |
         ◇    RECEIVED    ◇────NO─────────►|
         ◇ INFORMATION ON ◇                |
         ◇SUSPICIOUS PERSON OR SUSPICIOUS◇ |
         ◇  VEHICLE DRIVER? ◇              |
                        |                   |
                       YES                  |
                        | ╭S53             |
                        ▼                   |
    ◇ RESPONSE-INABILITY ◇                |
    ◇ SETTING FLAG INDICATING ◇──NO──────►|
    ◇ NOT BEING ABLE TO ANSWER BACK TO ◇   |
    ◇INFORMATION TRANSMITTED FROM MONITORING◇
    ◇   DEVICE 100 HAS BEEN SET? ◇         |
                        |                   |
                       YES                  |
           ┌────────────┤                   |
           |            | ╭S54             |
           |            ▼                   |
           |   ◇    WAIT FOR    ◇           |
    NO─────┤   ◇ PREDETERMINED BUTTON ◇    |
           |   ◇OPERATION FROM EMPLOYEE CARRYING◇
           |   ◇  MOBILE TERMINAL DEVICE 30 ◇
           |   ◇     WITH HIM/HER?  ◇       |
   TIMEOUT |            |                   |
           |           YES                  |
           |            ▼                   |
           |   ┌─────────────────────┐     |
           |   │IMMEDIATELY RETURN ANSWER-BACK│
           |   │NAC OF RESPONSE-INABILITY TO  │╌S55
           |   │MONITORING DEVICE 100         │
           |   └─────────────────────┘     |
           |            | ╭S56             |
           |            ▼                   |
           |   ◇ IS THERE BUTTON ◇──NO────►|
           |   ◇  OPERATION?   ◇            |
           |            |                   |
           |           YES                  |
           |            ▼                   |
           |   ┌─────────────────────┐     |
           |   │TRANSMIT ANSWER-BACK SIGNAL │╌S57
           |   │(ACKNOWLEDGEMENT: ACK)      │
           |   │TO MONITORING DEVICE 100    │
           |   └─────────────────────┘     |
           └────────────┤───────────────────┘
                        ▼
                    ( END )
```

## F I G. 1 2 A

FLOOR-NUMBER CONFIGURATION
EXEMPLIFICATION PARKING

| PARKING 6F | BACK FACILITY ENTRANCE/EXIT |
|---|---|
| PARKING 5F | OFFICE ROOM A. STORE MANAGER SECURITY GUARDS ROOM B. SECURITY GUARD |
| HOME AND LIVING A.FLOOR MANAGER B.SALES FLOOR MANAGER 4F C.CORNER MANAGER | C.BACK FACILITY HOME AND LIVING WAREHOUSE |
| MISCELLANEOUS HOUSEHOLD GOODS,COSMETIC GOODS,DRUG D.FLOOR MANAGER E.CORNER MANAGER 3F F.SALES FLOOR MANAGER | D.BACK FACILITY MISCELLANEOUS HOUSEHOLD GOODS, COSMETIC, DRUG WAREHOUSE |
| CLOTHING G.FLOOR MANAGER H.SALES FLOOR MANAGER 2F I.CORNER MANAGER | E.BACK FACILITY CLOTHING |

| PERISHABLE FOOD J. FLOOR MANAGER K.SALES FLOOR MANAGER L.CORNER 1F MANAGER | F.PERISHABLE FOOD WAREHOUSE | G. CARGO HANDLING AREA INSPECTION AREA | H TRUCK ● SUSPICIOUS PERSON |

GPS/RFID READER
IN BUILDING/BACK
FACILITY SENSOR
MONITORING CAMERA

TRUCK YARD OUTSIDE
BUILDING
VEHICLE STOPPER
DEVICE
GPS/RFID READER
SENSOR
MONITORING CAMERA

## F I G. 1 2 B

| A. TRUCK YARD A1.TRUCK YARD ENTRANCE/EXIT A2.MONITORING CAMERA A3.RFID READER | B.CARGO UNLOADING AND HANDLING AREA B1.CARGO HANDLING AREA ENTRANCE/EXIT B2.MONITORING CAMERA B3.RFID READER | C.INSPECTION AREA C1.INSPECTION AREA ENTRANCE/EXIT C2.MONITORING CAMERA C3.RFID READER |
|---|---|---|

——————————————— GPS
——————————————— RFID READER

| D. 1ST FLOOR FRESH FISH WAREHOUSE AND KITCHEN D1.FRESH FISH WAREHOUSE ENTRANCE/EXIT D2.FRESH FISH WAREHOUSE D3.FRESH FISH KITCHEN ENTRANCE/EXIT D4.FRESH FISH KITCHEN D5.FRESH FISH REFRIGERATOR D6.FRESH FISH FREEZER D7.MONITORING CAMERA D8.RFID READER | E. 1ST FLOOR MEAT WAREHOUSE AND KITCHEN E1.MEAT WAREHOUSE ENTRANCE/EXIT SUSPICIOUS ● PERSON E2.MEAT WAREHOUSE E3.MEAT KITCHEN ENTRANCE/EXIT E4.MEAT KITCHEN E5.MEAT REFRIGERATOR E6.MEAT FREEZER D7.MONITORING CAMERA D8.RFID READER | F.1ST FLOOR DELICATESSEN WAREHOUSE AND KITCHEN F1. DELICATESSEN WAREHOUSE ENTRANCE/EXIT F2. DELICATESSEN WAREHOUSE F3. DELICATESSEN KITCHEN ENTRANCE/EXIT F4. DELICATESSEN KITCHEN F5. DELICATESSEN REFRIGERATOR F6. DELICATESSEN FREEZER F7. MONITORING CAMERA F8. RFID READER |
|---|---|---|

——————————————— GPS
RFID READER

| G.1ST FLOOR FRUIT AND VEGETABLE PROCESSING ROOM G1.FRUIT AND VEGETABLE WAREHOUSE ENTRANCE/EXIT G2.FRUIT AND VEGETABLE WAREHOUSE G3.FRUIT AND VEGETABLE PROCESSING ROOM ENTRANCE/EXIT G4.FRUIT AND VEGETABLE PROCESSING ROOM G5.FRUIT AND VEGETABLE PROCESSING REGENERATOR G6. MONITORING CAMERA G7.RFID READER | H. 1ST FLOOR GROCERY WAREHOUSE H1.GROCERY WAREHOUSE ENTRANCE/EXIT H2.GROCERY WAREHOUSE H3.GROCERY REFRIGERATOR H4.GROCERY FREEZER H5.MONITORING CAMERA H6.RFID READER | J1.2ND FLOOR CLOTHING WAREHOUSE J1..CLOTHING WAREHOUSE ENTRANCE/EXIT J2..FACE AUTHENTICATION CAMERA J3..RFID READER I1.3RD FLOOR MISCELLANEOUS GOODS WAREHOUSE I1. MISCELLANEOUS GOODS WAREHOUSE ENTRANCE/EXIT D7.MONITORING CAMERA D8.RFID READER |
|---|---|---|

| H.PASSWORD MANAGER H1.COMMERCIAL FACILITY'S PC MANAGER H2.PCS,TABLETS, OR SMART MOBILE DEVICES OF PERSONS IN CHARGE OF A TO F | I. PASSWORD MANAGER OF CORPORATE-AREA STORE I1. PCS,TABLETS, OR SMART MOBILE DEVICES OF PERSONS IN CHARGE | J. PASSWORD MANAGER OF COMMERCIAL FACILITY HEADQUARTERS PCS, TABLETS, OR SMART MOBILE DEVICES |
|---|---|---|

——————————————— GPS
RFID READER

## F I G. 1 3 A

GROCERY WAREHOUSE

○ EMPLOYEE
SALES FLOOR

INSPECTION
AREA

TRUCK YARD

B

◇ MONITORING
CAMERA C1

○ EMPLOYEE

× VEHICLE
STOPPER DEVICE

◇ MONITORING
CAMERA C2

◇ MONITORING
CAMERA C7

BACK FACILITY

◇ MONITORING
CAMERA C4

○ EMPLOYEE

◇ MONITORING
CAMERA C3

◇ MONITORING
CAMERA C5

◇ MONITORING CAMERA C6

○ EMPLOYEE

○ EMPLOYEE

◎ EMPLOYEE

A

● SUSPICIOUS
PERSON

PERISHABLE
FOOD
WAREHOUSE

PERISHABLE
FOOD
WAREHOUSE

## F I G. 1 3 B

GROCERY WAREHOUSE

INSPECTION
AREA

TRUCK YARD

SALES FLOOR

△ RFID
READER R1

○ EMPLOYEE

× VEHICLE
STOPPER DEVICE

BACK FACILITY

○ EMPLOYEE

△ RFID READER R2

△ RFID
READER R3

△ RFID READER R7

△ RFID READER R4

△ RFID READER R6  △ RFID READER R5

PERISHABLE
FOOD
WAREHOUSE

PERISHABLE
FOOD
WAREHOUSE

● SUSPICIOUS
PERSON

◎ EMPLOYEE

37

**INTERNATIONAL SEARCH REPORT**

| International application No. |
| --- |
| PCT/JP2014/083970 |

| A. CLASSIFICATION OF SUBJECT MATTER |
| --- |
| *G08B25/04*(2006.01)i, *G08B25/10*(2006.01)i |

According to International Patent Classification (IPC) or to both national classification and IPC

| B. FIELDS SEARCHED |
| --- |
| Minimum documentation searched (classification system followed by classification symbols)<br>G08B25/04, G08B25/10 |

| Documentation searched other than minimum documentation to the extent that such documents are included in the fields searched |
| --- |
| Jitsuyo Shinan Koho        1922–1996   Jitsuyo Shinan Toroku Koho   1996–2015<br>Kokai Jitsuyo Shinan Koho   1971–2015   Toroku Jitsuyo Shinan Koho   1994–2015 |

| Electronic data base consulted during the international search (name of data base and, where practicable, search terms used) |
| --- |
| |

| C. DOCUMENTS CONSIDERED TO BE RELEVANT |
| --- |

| Category* | Citation of document, with indication, where appropriate, of the relevant passages | Relevant to claim No. |
| --- | --- | --- |
| Y<br>A | JP 2008-230745 A  (Toshiba Elevator and Building Systems Corp.), 02 October 2008 (02.10.2008), paragraphs [0012] to [0047] (Family: none) | 1-4,6-8<br>5 |
| Y<br>A | JP 9-106498 A  (Oki Electric Industry Co., Ltd.), 22 April 1997 (22.04.1997), paragraphs [0005], [0009] (Family: none) | 1-4,6-8<br>5 |
| A | JP 2011-216954 A  (NEC Access Technica, Ltd.), 27 October 2011 (27.10.2011), paragraph [0038] (Family: none) | 1-8 |

| ☒ Further documents are listed in the continuation of Box C. | ☐ See patent family annex. |
| --- | --- |

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search<br>12 March 2015 (12.03.15) | Date of mailing of the international search report<br>24 March 2015 (24.03.15) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2014/083970

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2005-141481 A  (Hitachi Kokusai Electric Inc.), 02 June 2005 (02.06.2005), paragraphs [0036] to [0039] (Family: none) | 1-8 |
| A | JP 2010-231422 A  (Nippon Telegraph and Telephone Corp.), 14 October 2010 (14.10.2010), paragraphs [0053] to [0054], [0114] to [0115] (Family: none) | 1-8 |
| A | JP 2012-78971 A  (The Chugoku Electric Power Co., Inc.), 19 April 2012 (19.04.2012), paragraphs [0138] to [0142] (Family: none) | 1-8 |
| A | JP 9-297796 A  (Mitsubishi Electric Building Techno-Service Co., Ltd.), 18 November 1997 (18.11.1997), paragraphs [0030] to [0036] (Family: none) | 1-8 |
| A | JP 2003-256989 A  (Koichi HIRATA), 12 September 2003 (12.09.2003), paragraph [0057] (Family: none) | 1-8 |
| A | JP 2000-83269 A  (NCR International Inc.), 21 March 2000 (21.03.2000), entire text; all drawings & US 6774765 B1         & EP 973316 A2 & AU 3507599 A          & ZA 9903982 A & NZ 336306 A            & CA 2270275 A & CA 2270275 A1 | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011233133 A

- JP 2008257487 A